# EUROPEAN PATENT APPLICATION

(11) **EP 4 653 281 A1**
(43) Date of publication of application: **26.11.2025**
(21) Application number: 24921097.2
(22) Date of filing: 05.02.2024
(51) Int. Cl.: B60W 30/182, B60W 20/20, B60W 10/08

(54) **ENERGY MANAGEMENT METHOD AND APPARATUS, AND ELECTRONIC DEVICE, INTELLIGENT VEHICLE AND STORAGE MEDIUM**

(30) Priority: 30.01.2024 CN 202410137207
(71) Applicant: Chongqing Changan Automobile Co., Ltd., Chongqing 400023 (CN)
(72) Inventor: CAO, Rui, Chongqing 400023 (CN); HUANG, Jun, Chongqing 400023 (CN); JIANG, Zhen, Chongqing 400023 (CN); HU, Xianli, Chongqing 400023 (CN); TIAN, Yun, Chongqing 400023 (CN)
(74) Representative: Groth & Co. KB
(86) International application number: PCT/CN2024/076059
(87) International publication number: WO 2025/161045

(57) **Abstract**

The present application relates to the field of hybrid vehicles, and specifically to an energy management method and apparatus, an electronic device, an intelligent vehicle, and a storage medium. The method includes: obtaining a current destination corresponding to a target vehicle and a corresponding target driving route for driving to the current destination; determining, based on a relationship between the current destination and the target driving route, whether the target vehicle will be recharged after driving to the current destination; determining a destination type corresponding to the current destination based on a current departure date, a current departure time, and the target driving route; and determining an energy management mode corresponding to the target vehicle based on the destination type, a result of determining whether the target vehicle will be recharged after driving to the current destination, and the target driving route. A use scenario of the target vehicle is combined with the energy management mode of the target vehicle to ensure that the energy consumption of the target vehicle is optimal in various scenarios.

## Description

### Technical Field

The present application relates to the field of hybrid vehicles, and specifically to an energy management method and apparatus, an electronic device, an intelligent vehicle, and a storage medium.

### Background

With the advancement of electrification in the automotive industry, hybrid vehicles are gaining increasing market share due to their smooth and quiet driving performance in pure electric driving mode and reduced mileage anxiety compared to pure electric vehicles. However, under some specific operating conditions, the performance of hybrid vehicles can be significantly compromised.

In existing technologies, the energy management strategies for current hybrid vehicles typically prioritize electric power over fuel. When the trip distance is long, the traction battery remains in a charge-sustaining state in the latter part of the journey. When the vehicle is in charge-sustaining driving mode, the engine must simultaneously provide propulsion and recharge the traction battery, resulting in increased energy consumption. Additionally, both the drivability and the NVH performance of the vehicle are compromised. The lower the state of charge of the traction battery, the higher the operating speed of the engine, and the worse the NVH performance. Particularly in low-speed operating conditions such as urban areas or traffic congestion, frequent starting and stopping of the engine make the deterioration in vehicle performance more noticeable to drivers.

Therefore, how to achieve energy management for hybrid vehicles has become an urgent issue to be resolved.

### Summary

In view of this, the present application provides an energy management method and apparatus, an electronic device, an intelligent vehicle, and a storage medium, to resolve the problem of how to achieve energy management for hybrid vehicles.

According to a first aspect, the present application provides an energy management method. The method includes:
obtaining a current destination corresponding to a target vehicle and a corresponding target driving route for driving to the current destination;
determining, based on a relationship between the current destination and the target driving route, whether the target vehicle will be recharged after driving to the current destination;
determining a destination type corresponding to the current destination based on a current departure date, a current departure time, and the target driving route, where the destination type includes a one-way destination and/or a round-trip destination, and the round-trip destination indicates that the current destination is a destination of the target vehicle in one direction in a round trip; and
determining an energy management mode corresponding to the target vehicle based on the destination type, a result of determining whether the target vehicle will be recharged after driving to the current destination, and the target driving route.

In the energy management method provided in the embodiments of the present application, a current destination corresponding to a target vehicle and a corresponding target driving route for driving to the current destination are obtained, and whether the target vehicle will be recharged after driving to the current destination is determined based on a relationship between the current destination and the target driving route, thereby ensuring the accuracy of the result of determining whether the target vehicle will be recharged after driving to the current destination. A destination type corresponding to the current destination is determined based on a current departure date, a current departure time, and the target driving route, thereby ensuring the accuracy of the determined destination type. An energy management mode corresponding to the target vehicle is determined based on the destination type, a result of determining whether the target vehicle will be recharged after driving to the current destination, and the target driving route, thereby ensuring the accuracy of the determined energy management mode corresponding to the target vehicle. A use scenario of the target vehicle is combined with the energy management mode of the target vehicle to ensure that the energy consumption of the target vehicle is optimal in various scenarios.

In an optional implementation, the step of obtaining a current destination corresponding to a target vehicle and a corresponding target driving route for driving to the current destination includes:
detecting whether navigation functionality is activated in the target vehicle;
obtaining a current place of departure, the current departure date, and the current departure time corresponding to the target vehicle if the navigation functionality is not activated in the target vehicle;
generating a predicted destination corresponding to the target vehicle based on a relationship among the current place of departure, the current departure date, and the current departure time;
generating a predicted driving route for driving of the target vehicle from the current place of departure to the predicted destination based on a relationship among the predicted destination, the current place of departure, the current departure date, and the current departure time;
determining whether the predicted destination and the predicted driving route are accurate; and
if the predicted destination and the predicted driving route are accurate, determining the predicted destination to be the current destination, and determining the predicted driving route to be the target driving route.

In the energy management method provided in the embodiments of the present application, it is detected whether navigation functionality is activated in the target vehicle, thereby ensuring the accuracy of the obtained detection result. A current place of departure, the current departure date, and the current departure time corresponding to the target vehicle are obtained if the navigation functionality is not activated in the target vehicle; and a predicted destination corresponding to the target vehicle is generated based on a relationship among the current place of departure, the current departure date, and the current departure time, thereby ensuring the accuracy of the generated predicted destination. A predicted driving route for driving of the target vehicle from the current place of departure to the predicted destination is generated based on a relationship among the predicted destination, the current place of departure, the current departure date, and the current departure time, thereby ensuring the accuracy of the generated predicted driving route. It is determined whether the predicted destination and the predicted driving route are accurate, and if the predicted destination and the predicted driving route are accurate, the predicted destination is determined to be the current destination, and the predicted driving route is determined to be the target driving route, so that when the navigation functionality is not activated in the target vehicle, the current destination corresponding to the target vehicle and the corresponding target driving route for driving to the current destination are determined, so that the energy of the target vehicle can be planned in advance based on the current destination and the target driving route.

In an optional implementation, the step of generating a predicted destination corresponding to the target vehicle based on a relationship among the current place of departure, the current departure date, and the current departure time includes:
inputting the current place of departure, the current departure date, and the current departure time into a destination prediction model, and performing, by using the destination prediction model, feature extraction on the current place of departure, the current departure date, and the current departure time to output the predicted destination, where the destination prediction model is obtained by training based on a plurality of first historical user travel routes, each of the first historical user travel routes includes a first historical place of departure, a first historical destination, a first historical departure date, and a first historical departure time, and the first historical destination is used as first label information.

In the energy management method provided in the embodiments of the present application, the current place of departure, the current departure date, and the current departure time are inputted into a destination prediction model, and the destination prediction model performs feature extraction on the current place of departure, the current departure date, and the current departure time to output the predicted destination. Through the foregoing method, the destination prediction model is obtained by training based on the plurality of first historical user travel routes, and historical travel patterns of a user are comprehensively considered, so that the accuracy of the outputted predicted destination can be ensured.

In an optional implementation, the step of generating a predicted driving route for driving of the target vehicle from the current place of departure to the predicted destination based on a relationship among the predicted destination, the current place of departure, the current departure date, and the current departure time includes:
determining current traffic conditions for optional routes from the current place of departure to the predicted destination on the current departure date and at the current departure time based on the relationship among the predicted destination, the current place of departure, the current departure date, and the current departure time;
obtaining current travel weather; and
inputting the current travel weather, the current place of departure, the predicted destination, the optional routes, and the current traffic conditions corresponding to the optional routes into a travel route prediction model to output the predicted driving route corresponding to the predicted destination, where the travel route prediction model is obtained by training based on a plurality of second historical user travel routes, each of the second historical user travel routes includes a second historical place of departure, a second historical destination, a second historical travel weather, a second historical driving route from the second historical place of departure to the second historical destination, and a historical traffic condition of the second historical driving route, and the second historical driving route is used as second label information.

In the energy management method provided in the embodiments of the present application, current traffic conditions for optional routes from the current place of departure to the predicted destination on the current departure date and at the current departure time are determined based on the relationship among the predicted destination, the current place of departure, the current departure date, and the current departure time, thereby ensuring the accuracy of determining the current traffic conditions for each optional route. Current travel weather is obtained, and the current travel weather, the current place of departure, the predicted destination, the optional routes, and the current traffic conditions corresponding to the optional routes are inputted into a travel route prediction model, and the predicted driving route corresponding to the predicted destination is outputted. Through the foregoing method, the travel route prediction model is obtained by training based on the plurality of second historical user travel routes, and the current departure date, the current departure time, the current traffic conditions for each optional route, and the current travel weather are comprehensively considered, so that the accuracy of the outputted predicted driving route can be ensured.

In an optional implementation, the step of determining whether the predicted destination and the predicted driving route are accurate includes:
displaying the predicted destination and the predicted driving route to a user, and receiving a first instruction inputted by the user; and
determining, based on the first instruction, whether the predicted destination and the predicted driving route are accurate.

In the energy management method provided in the embodiments of the present application, the predicted destination and the predicted driving route are displayed to a user, a first instruction inputted by the user is received, and whether the predicted destination and the predicted driving route are accurate is determined based on the first instruction, so that the result of whether the predicted destination and the predicted driving route are accurate can be accurately determined.

In an optional implementation, the method further includes:
receiving the current destination inputted by a user if the predicted destination or the predicted driving route is not accurate;
inputting the current travel weather, the current place of departure, the current destination, and the current traffic conditions corresponding to the optional routes into the travel route prediction model to output a candidate driving route corresponding to the current destination; and
correcting the candidate driving route in real time based on current location information of the target vehicle to obtain the target driving route.

In the energy management method provided in the embodiments of the present application, the current destination inputted by a user is received if the predicted destination or the predicted driving route is not accurate, the current travel weather, the current place of departure, the current destination, and the current traffic conditions corresponding to the optional routes are inputted into the travel route prediction model to output a candidate driving route corresponding to the current destination, and the candidate driving route is corrected in real time based on current location information of the target vehicle to obtain the target driving route. The accuracy of the obtained target driving route corresponding to the current destination is ensured, the intentions of the user are met, and the user does not need to select the target driving route.

In an optional implementation, the step of determining, based on a relationship between the current destination and the target driving route, whether the target vehicle will be recharged after driving to the current destination includes:
obtaining a current place of departure and the current departure time of the target vehicle;
determining, based on the current departure time, an arrival time of the target vehicle driving from the current place of departure to the current destination according to the target driving route;
obtaining a current remaining state of charge of the target vehicle;
calculating, based on the current remaining state of charge of the target vehicle, an estimated remaining state of charge of the target vehicle after driving to the current destination; and
determining, based on the arrival time, the estimated remaining state of charge, and the current destination, whether the target vehicle will be recharged after driving to the current destination.

In the energy management method provided in the embodiments of the present application, a current place of departure and the current departure time of the target vehicle are obtained, and an arrival time of the target vehicle driving from the current place of departure to the current destination according to the target driving route is determined based on the current departure time, thereby ensuring the accuracy of the determined arrival time. A current remaining state of charge of the target vehicle is obtained, and an estimated remaining state of charge of the target vehicle after driving to the current destination is calculated based on the current remaining state of charge of the target vehicle, thereby ensuring the accuracy of the calculated estimated remaining state of charge. Whether the target vehicle will be recharged after driving to the current destination is determined based on the arrival time, the estimated remaining state of charge, and the current destination, so that the accuracy of the result of whether the target vehicle will be recharged after driving to the current destination can be ensured.

In an optional implementation, the step of calculating, based on the current remaining state of charge of the target vehicle, an estimated remaining state of charge of the target vehicle after driving to the current destination includes:
obtaining a terrain of the target driving route, an average driving speed of the target vehicle, a current driving mileage corresponding to the target driving route, current ambient temperature information, and in-vehicle electrical device setting information;
determining a first trip energy consumption for driving of the target vehicle from the current place of departure to the current destination according to the target driving route based on the terrain, the average driving speed, the current driving mileage, the current ambient temperature information, and the in-vehicle electrical device setting information; and
subtracting the first trip energy consumption from the current remaining state of charge to obtain the estimated remaining state of charge.

In the energy management method provided in the embodiments of the present application, a terrain of the target driving route, an average driving speed of the target vehicle, a current driving mileage corresponding to the target driving route, current ambient temperature information, and in-vehicle electrical device setting information are obtained, and a first trip energy consumption for driving of the target vehicle from the current place of departure to the current destination according to the target driving route is determined based on the terrain, the average driving speed, the current driving mileage, the current ambient temperature information, and the in-vehicle electrical device setting information, thereby ensuring the accuracy of the determined first trip energy consumption. The first trip energy consumption is subtracted from the current remaining state of charge to obtain the estimated remaining state of charge, thereby ensuring the accuracy of the obtained estimated remaining state of charge.

In an optional implementation, the step of determining, based on the arrival time, the estimated remaining state of charge, and the current destination, whether the target vehicle will be recharged after driving to the current destination includes:
inputting the arrival time, the estimated remaining state of charge, and the current destination into a recharging behavior prediction model to output a result of whether the target vehicle will be recharged after driving to the current destination by using the recharging behavior prediction model, where the recharging behavior prediction model is obtained by training based on historical recharging places, historical recharging time periods, and historical recharging initial ranges of remaining state of charge.

In the energy management method provided in the embodiments of the present application, the arrival time, the estimated remaining state of charge, and the current destination are inputted into a recharging behavior prediction model to output a result of whether the target vehicle will be recharged after driving to the current destination by using the recharging behavior prediction model, thereby ensuring the accuracy of the result of whether the target vehicle will be recharged after driving to the current destination.

In an optional implementation, the step of determining, based on the arrival time, the estimated remaining state of charge, and the current destination, whether the target vehicle will be recharged after driving to the current destination includes:
determining whether the current destination meets a recharging condition;
when the current destination meets the recharging condition, determining whether the arrival time is within a historical recharging time period range and whether the estimated remaining state of charge is within a historical recharging initial range of remaining state of charge;
if the arrival time is within the historical recharging time period range and the estimated remaining state of charge is within the historical recharging initial range of remaining state of charge, determining that the target vehicle will be recharged after driving to the current destination; and
if the arrival time is not within the historical recharging time period range or/and the estimated remaining state of charge is not within the historical recharging initial range of remaining state of charge, determining that the target vehicle will not be recharged after driving to the current destination.

In the energy management method provided in the embodiments of the present application, whether the current destination meets a recharging condition is determined, when the current destination meets the recharging condition, it is determined whether the arrival time is within a historical recharging time period range and whether the estimated remaining state of charge is within a historical recharging initial range of remaining state of charge, and if the arrival time is within the historical recharging time period range and the estimated remaining state of charge is within the historical recharging initial range of remaining state of charge, it is determined that the target vehicle will be recharged after driving to the current destination, thereby ensuring the accuracy of the determined result that the target vehicle will be recharged after driving to the current destination. If the arrival time is not within the historical recharging time period range or/and the estimated remaining state of charge is not within the historical recharging initial range of remaining state of charge, it is determined that the target vehicle will not be recharged after driving to the current destination, thereby ensuring the accuracy of the determined result that the target vehicle will not be recharged after driving to the current destination.

In an optional implementation, the step of determining an energy management mode corresponding to the target vehicle based on the destination type, a result of determining whether the target vehicle will be recharged after driving to the current destination, and the target driving route includes:
if the current destination is a one-way destination and the target vehicle will not be recharged after driving to the current destination, determining a first trip energy consumption for driving of the target vehicle from a current place of departure to the current destination according to the target driving route;
calculating usable energy that the target vehicle can provide by consumption from a current remaining state of charge to a preset equilibrium state of charge;
if the first trip energy consumption is less than or equal to the usable energy, determining that the energy management mode corresponding to the target vehicle is pure electric driving mode; and
if the first trip energy consumption is greater than the usable energy, determining that the energy management mode corresponding to the target vehicle is hybrid driving mode.

In the energy management method provided in the embodiments of the present application, if the current destination is a one-way destination and the target vehicle will not be recharged after driving to the current destination, a first trip energy consumption for driving of the target vehicle from a current place of departure to the current destination according to the target driving route is determined, thereby ensuring the accuracy of the determined first trip energy consumption. Usable energy that the target vehicle can provide by consumption from a current remaining state of charge to a preset equilibrium state of charge is calculated, thereby ensuring the accuracy of the calculated usable energy. If the first trip energy consumption is less than or equal to the usable energy, it is determined that the energy management mode corresponding to the target vehicle is pure electric driving mode, thereby ensuring the accuracy of the determined energy management mode corresponding to the target vehicle being the pure electric driving mode. If the first trip energy consumption is greater than the usable energy, it is determined that the energy management mode corresponding to the target vehicle is hybrid driving mode, thereby ensuring the accuracy of the determined energy management mode corresponding to the target vehicle being the hybrid driving mode. In this way, an optimal full-trip energy consumption is achieved while the driving experience is ensured.

In an optional implementation, the step of determining an energy management mode corresponding to the target vehicle based on the destination type, a result of determining whether the target vehicle will be recharged after driving to the current destination, and the target driving route includes:
if the current destination is a one-way destination and the target vehicle will be recharged after driving to the current destination, determining a first trip energy consumption for driving of the target vehicle from a current place of departure to the current destination according to the target driving route;
calculating maximum energy that the target vehicle can provide by consumption from a current remaining state of charge to a minimum allowable state of charge;
comparing the first trip energy consumption with the maximum energy;
if the first trip energy consumption is less than or equal to the maximum energy, adjusting a preset equilibrium state of charge corresponding to the target vehicle down to the minimum allowable state of charge, and determining that the energy management mode corresponding to the target vehicle is pure electric driving mode, where the preset equilibrium state of charge is a preset value of the target vehicle, and when the current remaining state of charge reaches the preset equilibrium state of charge, the target vehicle is automatically adjusted to hybrid driving mode; and
if the first trip energy consumption is greater than the maximum energy, determining that the energy management mode corresponding to the target vehicle is the hybrid driving mode.

In the energy management method provided in the embodiments of the present application, if the current destination is a one-way destination and the target vehicle will be recharged after driving to the current destination, a first trip energy consumption for driving of the target vehicle from a current place of departure to the current destination according to the target driving route is determined, thereby ensuring the accuracy of the determined first trip energy consumption. Maximum energy that the target vehicle can provide by consumption from a current remaining state of charge to a minimum allowable state of charge is calculated, thereby ensuring the accuracy of the calculated maximum energy. The first trip energy consumption is compared with the maximum energy, and if the first trip energy consumption is less than or equal to the maximum energy, a preset equilibrium state of charge corresponding to the target vehicle is adjusted down to the minimum allowable state of charge, and it is determined that the energy management mode corresponding to the target vehicle is pure electric driving mode, thereby ensuring the accuracy of the determined energy management mode corresponding to the target vehicle being the pure electric driving mode. If the first trip energy consumption is greater than the maximum energy, it is determined that the energy management mode corresponding to the target vehicle is the hybrid driving mode, thereby ensuring the accuracy of the determined energy management mode corresponding to the target vehicle being the hybrid driving mode. In this way, an optimal full-trip energy consumption is achieved while the driving experience is ensured.

In an optional implementation, the step of determining an energy management mode corresponding to the target vehicle based on the destination type, a result of determining whether the target vehicle will be recharged after driving to the current destination, and the target driving route includes:
if the current destination is a round-trip destination and the target vehicle will not be recharged after driving to the current destination, determining a second trip energy consumption for driving of the target vehicle from a current place of departure to the current destination according to the target driving route and returning from the current destination to the current place of departure;
calculating usable energy that the target vehicle can provide by consumption from a current remaining state of charge to a preset equilibrium state of charge;
if the second trip energy consumption is greater than the usable energy, determining that the energy management mode corresponding to the target vehicle is hybrid driving mode; and
if the second trip energy consumption is less than or equal to the usable energy, determining that the energy management mode corresponding to the target vehicle is pure electric driving mode.

In the energy management method provided in the embodiments of the present application, if the current destination is a round-trip destination and the target vehicle will not be recharged after driving to the current destination, a second trip energy consumption for driving of the target vehicle from a current place of departure to the current destination according to the target driving route and returning from the current destination to the current place of departure is determined, thereby ensuring the accuracy of the calculated second trip energy consumption. Usable energy that the target vehicle can provide by consumption from a current remaining state of charge to a preset equilibrium state of charge is calculated, thereby ensuring the accuracy of the calculated usable energy. If the second trip energy consumption is greater than the usable energy, it is determined that the energy management mode corresponding to the target vehicle is hybrid driving mode, thereby ensuring the accuracy of the determined energy management mode corresponding to the target vehicle being the hybrid driving mode. If the second trip energy consumption is less than or equal to the usable energy, it is determined that the energy management mode corresponding to the target vehicle is pure electric driving mode, thereby ensuring the accuracy of the determined energy management mode corresponding to the target vehicle being the pure electric driving mode. In this way, an optimal full-trip energy consumption is achieved while the driving experience is ensured.

In an optional implementation, the step of determining an energy management mode corresponding to the target vehicle based on the destination type, a result of determining whether the target vehicle will be recharged after driving to the current destination, and the target driving route includes:
if the current destination is a round-trip destination and the target vehicle will be recharged after driving to the current destination, determining a first trip energy consumption for driving of the target vehicle from a current place of departure to the current destination according to the target driving route;
calculating maximum energy that the target vehicle can provide by consumption from a current remaining state of charge to a minimum allowable state of charge;
comparing the first trip energy consumption with the maximum energy;
if the first trip energy consumption is less than or equal to the maximum energy, adjusting a preset equilibrium state of charge corresponding to the target vehicle down to the minimum allowable state of charge, and determining that the energy management mode corresponding to the target vehicle is pure electric driving mode, where the preset equilibrium state of charge is a preset value of the target vehicle, and when the current remaining state of charge reaches the preset equilibrium state of charge, the target vehicle is automatically adjusted to hybrid driving mode; and
if the first trip energy consumption is greater than the maximum energy, determining that the energy management mode corresponding to the target vehicle is the hybrid driving mode.

In the energy management method provided in the embodiments of the present application, if the current destination is a round-trip destination and the target vehicle will be recharged after driving to the current destination, a first trip energy consumption for driving of the target vehicle from a current place of departure to the current destination according to the target driving route is determined, thereby ensuring the accuracy of the calculated first trip energy consumption. Maximum energy that the target vehicle can provide by consumption from a current remaining state of charge to a minimum allowable state of charge is calculated, thereby ensuring the accuracy of the calculated maximum energy. The first trip energy consumption is compared with the maximum energy, and if the first trip energy consumption is less than or equal to the maximum energy, a preset equilibrium state of charge corresponding to the target vehicle is adjusted down to the minimum allowable state of charge, and it is determined that the energy management mode corresponding to the target vehicle is pure electric driving mode, thereby ensuring the accuracy of the determined energy management mode corresponding to the target vehicle being the pure electric driving mode. If the first trip energy consumption is greater than the maximum energy, it is determined that the energy management mode corresponding to the target vehicle is the hybrid driving mode, thereby ensuring the accuracy of the determined energy management mode corresponding to the target vehicle being the hybrid driving mode. In this way, an optimal full-trip energy consumption is achieved while the driving experience is ensured.

In an optional implementation, the method further includes: when the energy management mode corresponding to the target vehicle is the hybrid driving mode, obtaining congested road segments or/and urban road segments in the target driving route corresponding to the target vehicle;
determining, based on road segment lengths of the congested road segments or/and the urban road segments, energy consumptions required for traveling through the congested road segments or/and the urban road segments;
calculating a sum of the energy consumptions required for traveling through the congested road segments or/and the urban road segments to obtain a total required energy consumption;
determining target road segments from the congested road segments or/and the urban road segments based on a relationship between the total required energy consumption and the usable energy or the maximum energy, and planning to travel through the target road segments in the pure electric driving mode; and
controlling an engine to engage in high-efficiency driving mode for road segments other than the target road segments.

In the energy management method provided in the embodiments of the present application, when the energy management mode corresponding to the target vehicle is the hybrid driving mode, congested road segments or/and urban road segments in the target driving route corresponding to the target vehicle are obtained, and energy consumptions required for traveling through the congested road segments or/and the urban road segments are determined based on road segment lengths of the congested road segments or/and the urban road segments, thereby ensuring the accuracy of the determined required energy consumptions. Target road segments are determined from the congested road segments or/and the urban road segments based on a relationship between the total required energy consumption and the usable energy or the maximum energy, and it is planned to travel through the target road segments in the pure electric driving mode, thereby ensuring the accuracy of the determined target road segments. An engine is controlled to engage in high-efficiency driving mode for road segments other than the target road segments. In this way, an optimal full-trip energy consumption is achieved while the driving experience is ensured.

According to a second aspect, the present application provides an energy management apparatus. The apparatus includes:
an obtaining module, configured to obtain a current destination corresponding to a target vehicle and a corresponding target driving route for driving to the current destination;
a judgment module, configured to determine, based on a relationship between the current destination and the target driving route, whether the target vehicle will be recharged after driving to the current destination;
a first determining module, configured to determine a destination type corresponding to the current destination based on a current departure date, a current departure time, and the target driving route, where the destination type includes a one-way destination and/or a round-trip destination, and the round-trip destination indicates that the current destination is a destination of the target vehicle in one direction in a round trip; and
a second determining module, configured to determine an energy management mode corresponding to the target vehicle based on the destination type, a result of determining whether the target vehicle will be recharged after driving to the current destination, and the target driving route.

In the energy management apparatus provided in the embodiments of the present application, a current destination corresponding to a target vehicle and a corresponding target driving route for driving to the current destination are obtained, and whether the target vehicle will be recharged after driving to the current destination is determined based on a relationship between the current destination and the target driving route, thereby ensuring the accuracy of the result of determining whether the target vehicle will be recharged after driving to the current destination. A destination type corresponding to the current destination is determined based on a current departure date, a current departure time, and the target driving route, thereby ensuring the accuracy of the determined destination type. An energy management mode corresponding to the target vehicle is determined based on the destination type, a result of determining whether the target vehicle will be recharged after driving to the current destination, and the target driving route, thereby ensuring the accuracy of the determined energy management mode corresponding to the target vehicle. A use scenario of the target vehicle is combined with the energy management mode of the target vehicle to ensure that the energy consumption of the target vehicle is optimal in various scenarios.

In an optional implementation, the obtaining module includes:
a detection unit, configured to detect whether navigation functionality is activated in the target vehicle;
a first obtaining unit, configured to obtain a current place of departure, the current departure date, and the current departure time corresponding to the target vehicle if the navigation functionality is not activated in the target vehicle;
a first generating unit, configured to generate a predicted destination corresponding to the target vehicle based on a relationship among the current place of departure, the current departure date, and the current departure time;
a second generating unit, configured to generate a predicted driving route for driving of the target vehicle from the current place of departure to the predicted destination based on a relationship among the predicted destination, the current place of departure, the current departure date, and the current departure time;
a judgment unit, configured to determine whether the predicted destination and the predicted driving route are accurate; and
a first determining unit, configured to: if the predicted destination and the predicted driving route are accurate, determine the predicted destination to be the current destination, and determine the predicted driving route to be the target driving route.

In an optional implementation, the first generating unit is configured to input the current place of departure, the current departure date, and the current departure time into a destination prediction model, and perform, by using the destination prediction model, feature extraction on the current place of departure, the current departure date, and the current departure time to output the predicted destination, where the destination prediction model is obtained by training based on a plurality of first historical user travel routes, each of the first historical user travel routes includes a first historical place of departure, a first historical destination, a first historical departure date, and a first historical departure time, and the first historical destination is used as first label information.

In an optional implementation, the second generating unit is configured to: determine current traffic conditions for optional routes from the current place of departure to the predicted destination on the current departure date and at the current departure time based on the relationship among the predicted destination, the current place of departure, the current departure date, and the current departure time; obtain current travel weather; and input the current travel weather, the current place of departure, the predicted destination, the optional routes, and the current traffic conditions corresponding to the optional routes into a travel route prediction model to output the predicted driving route corresponding to the predicted destination, where the travel route prediction model is obtained by training based on a plurality of second historical user travel routes, each of the second historical user travel routes includes a second historical place of departure, a second historical destination, a second historical travel weather, a second historical driving route from the second historical place of departure to the second historical destination, and a historical traffic condition of the second historical driving route, and the second historical driving route is used as second label information.

In an optional implementation, the judgment unit is configured to display the predicted destination and the predicted driving route to a user, and receive a first instruction inputted by the user; and determine, based on the first instruction, whether the predicted destination and the predicted driving route are accurate.

In an optional implementation, the second generating unit is configured to: receive the current destination inputted by a user if the predicted destination or the predicted driving route is not accurate; input the current travel weather, the current place of departure, the current destination, and the current traffic conditions corresponding to the optional routes into the travel route prediction model to output a candidate driving route corresponding to the current destination; and correct the candidate driving route in real time based on current location information of the target vehicle to obtain the target driving route.

In an optional implementation, the judgment module includes:
a second obtaining unit, configured to obtain a current place of departure and the current departure time of the target vehicle;
a second determining unit, configured to determine, based on the current departure time, an arrival time of the target vehicle driving from the current place of departure to the current destination according to the target driving route;
a third obtaining unit, configured to obtain a current remaining state of charge of the target vehicle;
a calculation unit, configured to calculate, based on the current remaining state of charge of the target vehicle, an estimated remaining state of charge of the target vehicle after driving to the current destination; and
a third determining unit, configured to determine, based on the arrival time, the estimated remaining state of charge, and the current destination, whether the target vehicle will be recharged after driving to the current destination.

In an optional implementation, the calculation unit is configured to obtain a terrain of the target driving route, an average driving speed of the target vehicle, a current driving mileage corresponding to the target driving route, current ambient temperature information, and in-vehicle electrical device setting information; determine a first trip energy consumption for driving of the target vehicle from the current place of departure to the current destination according to the target driving route based on the terrain, the average driving speed, the current driving mileage, the current ambient temperature information, and the in-vehicle electrical device setting information; and subtract the first trip energy consumption from the current remaining state of charge to obtain the estimated remaining state of charge.

In an optional implementation, the third determining unit is configured to input the arrival time, the estimated remaining state of charge, and the current destination into a recharging behavior prediction model to output a result of whether the target vehicle will be recharged after driving to the current destination by using the recharging behavior prediction model; when the current destination meets a recharging condition, determine whether the arrival time is within a historical recharging time period range and whether the estimated remaining state of charge is within a historical recharging initial range of remaining state of charge; and determine, based on a determining result, whether the target vehicle will be recharged after driving to the current destination.

In an optional implementation, the third determining unit is configured to: if the arrival time is within the historical recharging time period range and the estimated remaining state of charge is within the historical recharging initial range of remaining state of charge, determine that the target vehicle will be recharged after driving to the current destination; and if the arrival time is not within the historical recharging time period range or/and the estimated remaining state of charge is not within the historical recharging initial range of remaining state of charge, determine that the target vehicle will not be recharged after driving to the current destination.

In an optional implementation, the second determining module is configured to: if the current destination is a one-way destination and the target vehicle will not be recharged after driving to the current destination, determine a first trip energy consumption for driving of the target vehicle from a current place of departure to the current destination according to the target driving route; calculate usable energy that the target vehicle can provide by consumption from a current remaining state of charge to a preset equilibrium state of charge; if the first trip energy consumption is less than or equal to the usable energy, determine that the energy management mode corresponding to the target vehicle is pure electric driving mode; and if the first trip energy consumption is greater than the usable energy, determine that the energy management mode corresponding to the target vehicle is hybrid driving mode.

In an optional implementation, the second determining module is configured to: if the current destination is a one-way destination and the target vehicle will be recharged after driving to the current destination, determine a first trip energy consumption for driving of the target vehicle from a current place of departure to the current destination according to the target driving route; calculate maximum energy that the target vehicle can provide by consumption from a current remaining state of charge to a minimum allowable state of charge; compare the first trip energy consumption with the maximum energy; if the first trip energy consumption is less than or equal to the maximum energy, adjust a preset equilibrium state of charge corresponding to the target vehicle down to the minimum allowable state of charge, and determine that the energy management mode corresponding to the target vehicle is pure electric driving mode, where the preset equilibrium state of charge is a preset value of the target vehicle, and when the current remaining state of charge reaches the preset equilibrium state of charge, the target vehicle is automatically adjusted to hybrid driving mode; and if the first trip energy consumption is greater than the maximum energy, determine that the energy management mode corresponding to the target vehicle is the hybrid driving mode.

In an optional implementation, the second determining module is configured to: if the current destination is a round-trip destination and the target vehicle will not be recharged after driving to the current destination, determine a second trip energy consumption for driving of the target vehicle from a current place of departure to the current destination according to the target driving route and returning from the current destination to the current place of departure; calculate usable energy that the target vehicle can provide by consumption from a current remaining state of charge to a preset equilibrium state of charge; if the second trip energy consumption is greater than the usable energy, determine that the energy management mode corresponding to the target vehicle is hybrid driving mode; and if the second trip energy consumption is less than or equal to the usable energy, determine that the energy management mode corresponding to the target vehicle is pure electric driving mode.

In an optional implementation, the second determining module is configured to: if the current destination is a round-trip destination and the target vehicle will be recharged after driving to the current destination, determine a first trip energy consumption for driving of the target vehicle from a current place of departure to the current destination according to the target driving route; calculate maximum energy that the target vehicle can provide by consumption from a current remaining state of charge to a minimum allowable state of charge; compare the first trip energy consumption with the maximum energy; if the first trip energy consumption is less than or equal to the maximum energy, adjust a preset equilibrium state of charge corresponding to the target vehicle down to the minimum allowable state of charge, and determine that the energy management mode corresponding to the target vehicle is pure electric driving mode, where the preset equilibrium state of charge is a preset value of the target vehicle, and when the current remaining state of charge reaches the preset equilibrium state of charge, the target vehicle is automatically adjusted to hybrid driving mode; and if the first trip energy consumption is greater than the maximum energy, determine that the energy management mode corresponding to the target vehicle is the hybrid driving mode.

In an optional implementation, the second determining module is further configured to: when the energy management mode corresponding to the target vehicle is the hybrid driving mode, obtain congested road segments or/and urban road segments in the target driving route corresponding to the target vehicle; determine, based on road segment lengths of the congested road segments or/and the urban road segments, energy consumptions required for traveling through the congested road segments or/and the urban road segments; calculate a sum of the energy consumptions required for traveling through the congested road segments or/and the urban road segments to obtain a total required energy consumption; determine target road segments from the congested road segments or/and the urban road segments based on a relationship between the total required energy consumption and the usable energy or the maximum energy, and plan to travel through the target road segments in the pure electric driving mode; and control an engine to engage in high-efficiency driving mode for road segments other than the target road segments.

According to a third aspect, the present application provides an electronic device, including: a memory and a processor, where the memory and the processor are communicatively connected to each other, the memory has computer instructions stored therein, and the processor is configured to perform the foregoing energy management method of the first aspect or any corresponding embodiment thereof by executing the computer instructions.

According to a fourth aspect, the present application provides an intelligent vehicle, including an intelligent vehicle body and an electronic device, where the electronic device is configured to perform the foregoing energy management method of the first aspect or any corresponding embodiment thereof.

According to a fifth aspect, the present application provides a computer-readable storage medium, where the computer-readable storage medium has computer instructions stored therein, and the computer instructions are configured to enable a computer to perform the foregoing energy management method of the first aspect or any corresponding embodiment thereof.

The energy management method provided in the embodiments of the present application has the following beneficial effects:
A current destination corresponding to a target vehicle and a corresponding target driving route for driving to the current destination are obtained, and whether the target vehicle will be recharged after driving to the current destination is determined based on a relationship between the current destination and the target driving route, thereby ensuring the accuracy of the result of determining whether the target vehicle will be recharged after driving to the current destination. A destination type corresponding to the current destination is determined based on a current departure date, a current departure time, and the target driving route, thereby ensuring the accuracy of the determined destination type. An energy management mode corresponding to the target vehicle is determined based on the destination type, a result of determining whether the target vehicle will be recharged after driving to the current destination, and the target driving route, thereby ensuring the accuracy of the determined energy management mode corresponding to the target vehicle. A use scenario of the target vehicle is combined with the energy management mode of the target vehicle to ensure that the energy consumption of the target vehicle is optimal in various scenarios.

### Brief Description of the Drawings

To describe the technical solutions in specific embodiments of the present application or the prior art more clearly, the following briefly introduces the accompanying drawings required for describing the specific embodiments or the prior art. Apparently, the accompanying drawings in the following description show some embodiments of the present application, and persons of ordinary skill in the art may still derive other drawings from these accompanying drawings without creative efforts.
FIG. 1 is a schematic flowchart of an energy management method according to an embodiment of the present application;
FIG. 2 is a schematic flowchart of another energy management method according to an embodiment of the present application;
FIG. 3 is a schematic flowchart of yet another energy management method according to an embodiment of the present application;
FIG. 4 is a schematic flowchart of still another energy management method when an energy management mode corresponding to a target vehicle is hybrid driving mode according to an embodiment of the present application;
FIG. 5 is a schematic flowchart of still another energy management method according to an embodiment of the present application;
FIG. 6 is a structural block diagram of an energy management apparatus according to an embodiment of the present application;
FIG. 7 is a structural block diagram of an energy management apparatus according to an embodiment of the present application;
FIG. 8 is a structural block diagram of an energy management apparatus according to an embodiment of the present application;
FIG. 9 is a schematic diagram of a hardware structure of an electronic device according to an embodiment of the present application; and
FIG. 10 is an architectural diagram of an electronic device performing an energy management method in an intelligent vehicle according to an embodiment of the present application.

### Detailed Description

To make the objectives, technical solutions, and advantages of embodiments of the present application clearer, the following clearly and completely describes the technical solutions in embodiments of the present application with reference to the accompanying drawings in embodiments of the present application. It is clear that the described embodiments are merely some rather than all of embodiments of the present application. All other embodiments obtained by persons skilled in the art based on embodiments of the present application without creative efforts shall fall within the scope of protection of the present application.

With the advancement of electrification in the automotive industry, hybrid vehicles are gaining increasing market share due to their smooth and quiet driving performance in pure electric driving mode and reduced mileage anxiety compared to pure electric vehicles. However, under some specific operating conditions, the performance of hybrid vehicles can be significantly compromised.

In existing technologies, the energy management strategies for current hybrid vehicles typically prioritize electric power over fuel. When the trip distance is long, the traction battery remains in a charge-sustaining state in the latter part of the journey. When the vehicle is in charge-sustaining driving mode, the engine must simultaneously provide propulsion and recharge the traction battery, resulting in increased energy consumption. Additionally, both the drivability and the NVH performance of the vehicle are compromised. The lower the state of charge of the traction battery, the higher the operating speed of the engine, and the worse the NVH performance. Particularly in low-speed operating conditions such as urban areas or traffic congestion, frequent starting and stopping of the engine make the deterioration in vehicle performance more noticeable to drivers.

Therefore, how to achieve energy management for hybrid vehicles has become an urgent issue to be resolved.

Current predictive energy management strategies on the market typically rely on limited in-vehicle signals to crudely judge users' driving habits, resulting in poor judgment accuracy. Others consider only a single user habit like destination recognition or recharging convenience, leading to incomplete coverage of energy management scenarios. Moreover, these strategies often focus solely on single-trip energy management. For users regularly commuting between two places with recharging available only in one direction, the traction battery may be depleted in the outbound trip, causing degraded performance in the return trip. For example, Reference Patent Document 1 (CN110605980A, Energy Management Method and System Based on Recharging Habits of Plug-in Hybrid Electric Vehicles) determines the difference between the current vehicle mileage and the total vehicle mileage at the last effective recharging event recorded by a user, and compares the difference with a fixed preset value. If the difference exceeds the preset value, it is determined that the user does not perform recharging frequently, and the equilibrium state of charge is simply raised to perform single-trip energy management based on navigation. The method and system fail to achieve energy management when navigation is inactive and considers only one-way trips, exhibiting deficiencies in both scenario coverage and comprehensiveness.

Based on this, embodiments of the present application provide an energy management method. According to embodiments of the present application, an embodiment of an energy management method is provided. It should be noted that the steps illustrated in the flowchart of the accompanying drawings may be performed in a computer system such as a set of computer-executable instructions, and that, although a logical sequence is shown in the flowchart, in some cases the steps shown or described may be performed in an order different from that shown herein.

It should be noted that the execution body of the energy management method provided in the embodiments of the present application may be an energy management apparatus. The energy management apparatus can be implemented through software, hardware, or a combination thereof as part or all of an electronic device. The electronic device may be a control terminal within an intelligent vehicle. The following method embodiments are described by using an example in which the execution body is an electronic device.

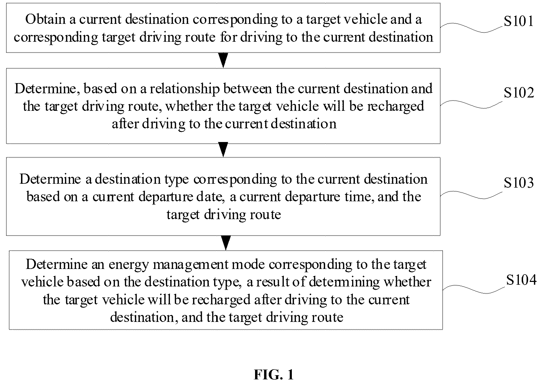

An energy management method is provided in this embodiment. FIG. 1 is a flowchart of an energy management method according to an embodiment of the present application. As shown in FIG. 1, the procedure includes the following steps.

Step S101. Obtain a current destination corresponding to a target vehicle and a corresponding target driving route for driving to the current destination.

Specifically, the electronic device may receive the current destination corresponding to the target vehicle and the corresponding target driving route for driving to the current destination inputted by a user, or the electronic device may predict the current destination corresponding to the target vehicle and the corresponding target driving route for driving to the current destination based on travel habits of the user, or the electronic device may obtain the current destination corresponding to the target vehicle and the corresponding target driving route for driving to the current destination based on a navigation system. The navigation system may be an in-vehicle navigation system of the target vehicle or may be a terminal-side navigation system communicatively connected to the target vehicle.

A manner in which the electronic device obtains the current destination corresponding to the target vehicle and the corresponding target driving route for driving to the current destination is not specifically limited in the embodiments of the present application.

The steps are described below in detail.

Step S102. Determine, based on a relationship between the current destination and the target driving route, whether the target vehicle will be recharged after driving to the current destination.

Specifically, the electronic device monitors a current remaining state of charge of the target vehicle in real time, and then determines, based on the current remaining state of charge and the target driving route, whether the target vehicle meets a preset recharging condition after driving to the current destination. If the target vehicle meets the preset recharging condition after driving to the current destination, the target vehicle will be recharged after driving to the current destination. If the target vehicle does not meet the preset recharging condition after driving to the current destination, the target vehicle will not be recharged after driving to the current destination.

The preset recharging condition is related to the current destination, an estimated remaining state of charge of the target vehicle after driving to the current destination, and the like.

Step S103. Determine a destination type corresponding to the current destination based on a current departure date, a current departure time, and the target driving route.

The destination type includes a one-way destination and/or a round-trip destination, and the round-trip destination indicates that the current destination is a destination of the target vehicle in one direction in a round trip.

Specifically, after determining the current destination, the electronic device determines the destination type corresponding to the current destination based on the travel habits of the user, the current departure date, the current departure time, and the target driving route.

The travel habits of the user include a plurality of historical user travel records. Each historical user travel record includes a historical place of departure, a historical destination, a historical departure date, and a historical departure time. For example, the historical user travel record may be departure from home to company at 8:00 on October 30, 2023; departure from company to home at 18:00 on October 30, 2023; departure from home to company at 8:00 on October 31, 2023; departure from company to home at 18:00 on October 31, 2023; departure from home to company at 8:00 on November 1, 2023; departure from company to home at 18:00 on November 1, 2023; departure from home to company at 8:00 on November 2, 2023; departure from company to home at 18:00 on November 2, 2023; and departure from home to supermarket at 10:00 on November 3, 2023.

For example, the current departure date is January 24, 2024, the current departure date is 8:00, and the target driving route is departure from home to company. Because January 24, 2024 is a workday, the electronic device determines that the current destination (i.e., company) is a round-trip destination.

Step S104. Determine an energy management mode corresponding to the target vehicle based on the destination type, a result of determining whether the target vehicle will be recharged after driving to the current destination, and the target driving route.

Specifically, when the current destination is a one-way destination, the electronic device plans, based on only the result of determining whether the target vehicle will be recharged after driving to the current destination, an energy management mode of driving to the current destination according to the target driving route.

When the current destination is a round-trip destination, the electronic device plans, based on the result of determining whether the target vehicle will be recharged after driving to the current destination, an energy management mode of driving to the current destination according to the target driving route and returning from the current destination to a current place of departure.

In the energy management method provided in this embodiment, a current destination corresponding to a target vehicle and a corresponding target driving route for driving to the current destination are obtained, and whether the target vehicle will be recharged after driving to the current destination is determined based on a relationship between the current destination and the target driving route, thereby ensuring the accuracy of the result of determining whether the target vehicle will be recharged after driving to the current destination. A destination type corresponding to the current destination is determined based on a current departure date, a current departure time, and the target driving route, thereby ensuring the accuracy of the determined destination type. An energy management mode corresponding to the target vehicle is determined based on the destination type, a result of determining whether the target vehicle will be recharged after driving to the current destination, and the target driving route, thereby ensuring the accuracy of the determined energy management mode corresponding to the target vehicle. A use scenario of the target vehicle is combined with the energy management mode of the target vehicle to ensure that the energy consumption of the target vehicle is optimal in various scenarios.

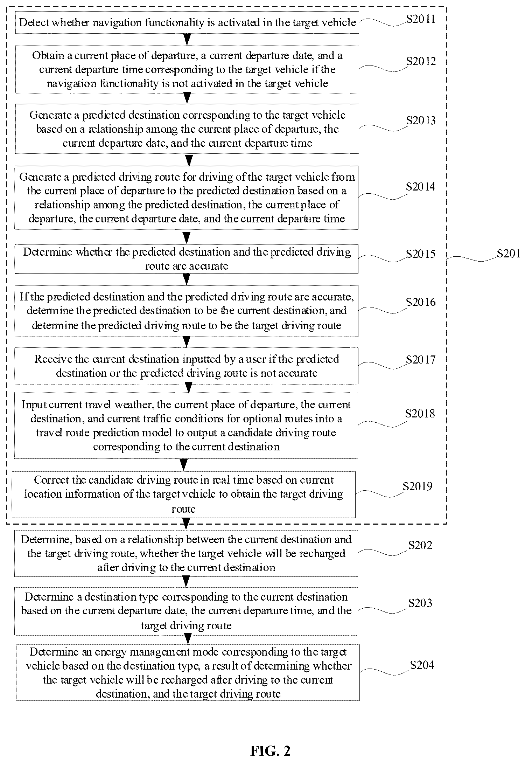

An energy management method is provided in this embodiment. FIG. 2 is a flowchart of another energy management method according to an embodiment of the present application. As shown in FIG. 2, the procedure includes the following steps.

Step S201. Obtain a current destination corresponding to a target vehicle and a corresponding target driving route for driving to the current destination.

Specifically, the foregoing step S201 includes the following steps.

Step S2011. Detect whether navigation functionality is activated in the target vehicle.

Specifically, the electronic device may detect, based on a communicative connection with in-vehicle navigation in the target vehicle, whether the in-vehicle navigation in the target vehicle is activated, and detects, based on a communicative connection with a mobile terminal interconnected to the target vehicle, whether navigation functionality is activated in the mobile terminal.

Step S2012. Obtain a current place of departure, a current departure date, and a current departure time corresponding to the target vehicle if the navigation functionality is not activated in the target vehicle.

Specifically, when both the in-vehicle navigation and navigation in the mobile terminal are activated, the electronic device may detect the current place of departure of the target vehicle based on a GPS system of the target vehicle, and obtain the current departure date and the current departure time based on a communicative connection with the in-vehicle electronic device.

Step S2013. Generate a predicted destination corresponding to the target vehicle based on a relationship among the current place of departure, the current departure date, and the current departure time.

In some optional implementations, the foregoing Step S2013 includes:
inputting the current place of departure, the current departure date, and the current departure time into a destination prediction model, and performing, by using the destination prediction model, feature extraction on the current place of departure, the current departure date, and the current departure time to output the predicted destination.

The destination prediction model is obtained by training based on a plurality of first historical user travel routes, each of the first historical user travel routes includes a first historical place of departure, a first historical destination, a first historical departure date, and a first historical departure time, and the first historical destination is used as first label information.

Specifically, the electronic device may input the current place of departure, the current departure date, and the current departure time into a destination prediction model, and the destination prediction model performs feature extraction on the current place of departure, the current departure date, and the current departure time to output the predicted destination.

The destination prediction model may be a decision tree model, or may be a random forest model, or may be another model. The destination prediction model is not specifically limited in the embodiments of the present application.

Step S2014. Generate a predicted driving route for driving of the target vehicle from the current place of departure to the predicted destination based on a relationship among the predicted destination, the current place of departure, the current departure date, and the current departure time.

In some optional implementations, the foregoing Step S2014 includes:
Step a1. Determine current traffic conditions for optional routes from the current place of departure to the predicted destination on the current departure date and at the current departure time based on the relationship among the predicted destination, the current place of departure, the current departure date, and the current departure time.

Specifically, the electronic device may determine optional routes from the current place of departure to the predicted destination based on the predicted destination and the current place of departure. The current traffic conditions corresponding to the optional routes are then determined based on the current place of departure and the current departure date.

Step a2. Obtain current travel weather.

Specifically, the electronic device may obtain the current travel weather based on current weather data.

Step a3. Input the current travel weather, the current place of departure, the predicted destination, the optional routes, and the current traffic conditions corresponding to the optional routes into a travel route prediction model to output the predicted driving route corresponding to the predicted destination.

The travel route prediction model is obtained by training based on a plurality of second historical user travel routes, each of the second historical user travel routes includes a second historical place of departure, a second historical destination, a second historical travel weather, a second historical driving route from the second historical place of departure to the second historical destination, and a historical traffic condition of the second historical driving route, and the second historical driving route is used as second label information.

Specifically, the electronic device may input the current travel weather, the current place of departure, the predicted destination, the optional routes, and the current traffic conditions corresponding to the optional routes into the travel route prediction model to output the predicted driving route corresponding to the predicted destination.

Specifically, the travel route prediction model may be a decision tree model, or may be a random forest model, or may be another model. The travel route prediction model is not specifically limited in the embodiments of the present application.

Step S2015. Determine whether the predicted destination and the predicted driving route are accurate.

In some optional implementations, the foregoing Step S2015 includes:
Step b1. Display the predicted destination and the predicted driving route to a user, and receiving a first instruction inputted by the user.

Specifically, the electronic device may display the predicted destination and the predicted driving route to the user based on a display component, or may output speech of the predicted destination and the predicted driving route to the user based on a speech component.

The electronic device then receives the first instruction inputted by the user. The first instruction may be selection of "Correct" or "Incorrect" by the user on the display component. The first instruction may be selection of "Yes" or "No" by the user on the display component, or may be "Correct" or "Incorrect" outputted by the user in speech, or "Yes" or "No" outputted by the user in speech.

In the embodiments of the present application, a manner of displaying the predicted destination and the predicted driving route to the user is not specifically limited, and a manner of receiving the first instruction inputted by the user is also not specifically limited.

Step b2. Determine, based on the first instruction, whether the predicted destination and the predicted driving route are accurate.

For example, when the first instruction is "Correct" or "Yes", it is determined that the current destination and the target driving route are accurate. When the first instruction is "Incorrect" or "No", it is determined that the current destination and the target driving route are not accurate.

Step S2016. If the predicted destination and the predicted driving route are accurate, determine the predicted destination to be the current destination, and determine the predicted driving route to be the target driving route.

Specifically, if the predicted destination and the predicted driving route are accurate, the electronic device may determine the predicted destination to be the current destination, and determine the predicted driving route to be the target driving route.

Step S2017. Receive the current destination inputted by a user if the predicted destination or the predicted driving route is not accurate.

Specifically, the current destination inputted by the user is received if the predicted destination or the predicted driving route is not accurate.

The electronic device may receive the current destination inputted by the user based on the display component, or may receive the current destination inputted by the user in speech. A manner in which the electronic device receives the current destination inputted by the user is not specifically limited in the embodiments of the present application.

Step S2018. Input current travel weather, the current place of departure, the current destination, and current traffic conditions for optional routes into a travel route prediction model to output a candidate driving route corresponding to the current destination.

Step S2019. Correct the candidate driving route in real time based on current location information of the target vehicle to obtain the target driving route.

Specifically, the electronic device may input the current travel weather, the current place of departure, the current destination, and the current traffic conditions corresponding to the optional routes into the travel route prediction model to output the candidate driving route corresponding to the current destination. When the current location information of the target vehicle conflicts with the candidate driving route, i.e., the target vehicle does not travel based on the candidate driving route, the candidate driving route is corrected in real time based on the current location information of the target vehicle to obtain the target driving route.

Specifically, after determining the current destination and the target driving route, the electronic device may perform navigation based on the current destination and the target driving route.

Step S202. Determine, based on a relationship between the current destination and the target driving route, whether the target vehicle will be recharged after driving to the current destination.

For the step, refer to the description of Step S102 in FIG. 1. Details are not described herein again.

Step S203. Determine a destination type corresponding to the current destination based on the current departure date, the current departure time, and the target driving route.

The destination type includes a one-way destination and/or a round-trip destination, and the round-trip destination indicates that the current destination is a destination of the target vehicle in one direction in a round trip.

For the step, refer to the description of Step S103 in FIG. 1. Details are not described herein again.

Step S204. Determine an energy management mode corresponding to the target vehicle based on the destination type, a result of determining whether the target vehicle will be recharged after driving to the current destination, and the target driving route.

For the step, refer to the description of Step S104 in FIG. 1. Details are not described herein again.

In the energy management method provided in the embodiments of the present application, it is detected whether navigation functionality is activated in the target vehicle, thereby ensuring the accuracy of the obtained detection result. The current place of departure, the current departure date, and the current departure time corresponding to the target vehicle are obtained if the navigation functionality is not activated in the target vehicle, and the current place of departure, the current departure date, and the current departure time are inputted into the destination prediction model, and the destination prediction model performs feature extraction on the current place of departure, the current departure date, and the current departure time to output the predicted destination. Through the foregoing method, the destination prediction model is obtained by training based on the plurality of first historical user travel routes, and historical travel patterns of a user are comprehensively considered, so that the accuracy of the outputted predicted destination can be ensured. Current traffic conditions for optional routes from the current place of departure to the predicted destination on the current departure date and at the current departure time are determined based on the relationship among the predicted destination, the current place of departure, the current departure date, and the current departure time, thereby ensuring the accuracy of determining the current traffic conditions for each optional route. Current travel weather is obtained, and the current travel weather, the current place of departure, the predicted destination, the optional routes, and the current traffic conditions corresponding to the optional routes are inputted into a travel route prediction model, and the predicted driving route corresponding to the predicted destination is outputted. Through the foregoing method, the travel route prediction model is obtained by training based on the plurality of second historical user travel routes, and the current departure date, the current departure time, the current traffic conditions for each optional route, and the current travel weather are comprehensively considered, so that the accuracy of the outputted predicted driving route can be ensured.

The predicted destination and the predicted driving route are then displayed to a user, a first instruction inputted by the user is received, and whether the predicted destination and the predicted driving route are accurate is determined based on the first instruction, so that the result of whether the predicted destination and the predicted driving route are accurate can be accurately determined. If the predicted destination and the predicted driving route are accurate, the predicted destination is determined to be the current destination, and the predicted driving route is determined to be the target driving route, so that when the navigation functionality is not activated in the target vehicle, the current destination corresponding to the target vehicle and the corresponding target driving route for driving to the current destination are determined, so that the energy of the target vehicle can be planned in advance based on the current destination and the target driving route. The current destination inputted by a user is received if the predicted destination or the predicted driving route is not accurate, the current travel weather, the current place of departure, the current destination, and the current traffic conditions corresponding to the optional routes are inputted into the travel route prediction model to output a candidate driving route corresponding to the current destination. The accuracy of the obtained target driving route corresponding to the current destination is ensured, the intentions of the user are met, and the user does not need to select the target driving route.

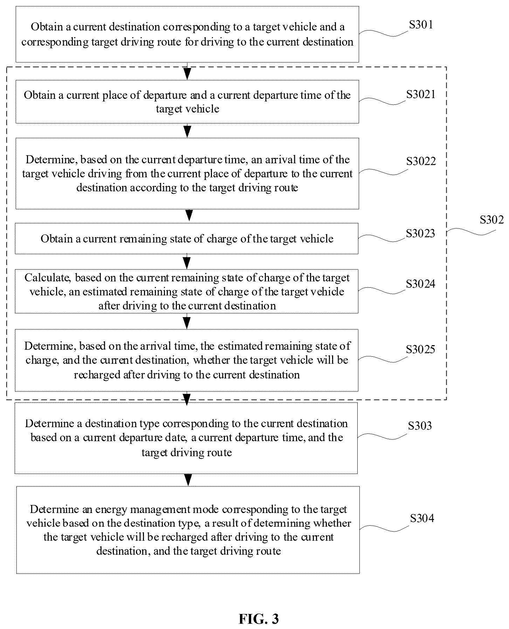

An energy management method is provided in this embodiment. FIG. 3 is a flowchart of an energy management method according to an embodiment of the present application. As shown in FIG. 3, the procedure includes the following steps.

Step S301. Obtain a current destination corresponding to a target vehicle and a corresponding target driving route for driving to the current destination.

For the step, refer to the description of Step S201 in FIG. 2. Details are not described herein again.

Step S302. Determine, based on a relationship between the current destination and the target driving route, whether the target vehicle will be recharged after driving to the current destination.

Specifically, the foregoing Step S302 may include the following steps:
Step S3021. Obtain a current place of departure and a current departure time of the target vehicle.

Specifically, the electronic device may detect the current place of departure of the target vehicle based on a GPS system of the target vehicle, and obtain the current departure time of the target vehicle based on a communicative connection with the in-vehicle electronic device.

Step S3022. Determine, based on the current departure time, an arrival time of the target vehicle driving from the current place of departure to the current destination according to the target driving route.

Optionally, when the target vehicle travels on the target driving route, the electronic device may obtain an average driving speed of the target vehicle in historical trips on the target driving route, estimate a required time for driving from the current place of departure to the current destination based on the average driving speed, and then add the required time to the current departure time to obtain the arrival time of the target vehicle driving from the current place of departure to the current destination according to the target driving route.

Optionally, when the target vehicle does not travel on the target driving route, the electronic device may obtain a terrain and current congestion of the target driving route. The electronic device may estimate a required time of the target vehicle driving from the current place of departure to the current destination based on the terrain of the target driving route, the current congestion of the target driving route, and driving habits of a user, and then add the required time to the current departure time to obtain the arrival time of the target vehicle driving from the current place of departure to the current destination according to the target driving route.

It should be noted that the target vehicle may alternatively obtain road congestion ahead in real time during driving, and update the arrival time of driving to the current destination in real time.

Step S3023. Obtain a current remaining state of charge of the target vehicle.

Specifically, the electronic device may detect the current remaining state of charge of the target vehicle in real time.

Step S3024. Calculate, based on the current remaining state of charge of the target vehicle, an estimated remaining state of charge of the target vehicle after driving to the current destination.

Specifically, the foregoing Step S3024 may include the following steps:
Step c1. Obtain a terrain of the target driving route, an average driving speed of the target vehicle, a current driving mileage corresponding to the target driving route, current ambient temperature information, and in-vehicle electrical device setting information.

Optionally, the electronic device may obtain the terrain of the target driving route based on a connection with a high-precision map device. The electronic device may estimate the average driving speed of the target vehicle based on the terrain of the target driving route, the current congestion of the target driving route, and the driving habits of the user. For example, if the user usually drives fast, the average driving speed of the target vehicle is high, and if the user usually drives slowly, the average driving speed of the target vehicle is low.

Optionally, when the target vehicle travels on the target driving route, the electronic device may obtain the average driving speed of the target vehicle in the historical trips on the target driving route.

Optionally, the electronic device may alternatively determine the current driving mileage corresponding to the target driving route according to the target driving route The current ambient temperature information is obtained based on a temperature sensor. Based on communicative connections with in-vehicle electrical devices, in-vehicle electrical device setting information is obtained, and electrical device energy consumptions of the in-vehicle electrical devices are determined based on the in-vehicle electrical device setting information.

Step c2. Determine a first trip energy consumption for driving of the target vehicle from the current place of departure to the current destination according to the target driving route based on the terrain, the average driving speed, the current driving mileage, the current ambient temperature information, and the in-vehicle electrical device setting information.

Optionally, the electronic device may input the terrain, the average driving speed, the current driving mileage, the current ambient temperature information, and the in-vehicle electrical device setting information into a preset energy consumption determining model. The preset energy consumption determining model performs feature extraction based on the terrain, the average driving speed, the current driving mileage, the current ambient temperature information, and the in-vehicle electrical device setting information to output the first trip energy consumption for driving of the target vehicle from the current place of departure to the current destination according to the target driving route.

The preset energy consumption determining model is obtained by training based on a plurality of third historical user travel routes. Each of the third historical user travel routes includes a historical travel route terrain, a historical average driving speed, a historical driving mileage, historical ambient temperature information, historical in-vehicle electrical device setting information, and a historical travel trip energy consumption. The historical travel trip energy consumption is third label information.

The preset energy consumption determining model may be a decision tree model, or may be a random forest model, or may be a CNN model, or may be another model. The preset energy consumption determining model is not specifically limited in the embodiments of the present application.

Optionally, the electronic device may determine a driving energy consumption corresponding to the target vehicle based on the terrain of the target driving route, the average driving speed of the target vehicle, the current driving mileage, and the current ambient temperature information.

The electrical device energy consumptions of the in-vehicle electrical devices are then determined based on the in-vehicle electrical device setting information. The driving energy consumption corresponding to the target vehicle and the electrical device energy consumptions of the in-vehicle electrical devices are added to obtain the first trip energy consumption for driving of the target vehicle from the current place of departure to the current destination according to the target driving route.

Step c3. Subtract the first trip energy consumption from the current remaining state of charge to obtain the estimated remaining state of charge.

Specifically, the electronic device subtracts the first trip energy consumption from the current remaining state of charge to obtain the estimated remaining state of charge.

Step S3025. Determine, based on the arrival time, the estimated remaining state of charge, and the current destination, whether the target vehicle will be recharged after driving to the current destination.

Specifically, the foregoing Step S3025 may include the following steps:
Step d1. Input the arrival time, the estimated remaining state of charge, and the current destination into a recharging behavior prediction model to output a result of whether the target vehicle will be recharged after driving to the current destination by using the recharging behavior prediction model.

The recharging behavior prediction model is obtained by training based on historical recharging places, historical recharging time periods, and historical recharging initial ranges of remaining state of charge.

Specifically, the electronic device may input the arrival time, the estimated remaining state of charge, and the current destination into the recharging behavior prediction model to output a result of whether the target vehicle will be recharged after driving to the current destination by using the recharging behavior prediction model.

Specifically, the recharging behavior prediction model may be a decision tree model, or may be a random forest model, or may be another model. The recharging behavior prediction model is not specifically limited in the embodiments of the present application.

Alternatively:
Step d2. Determine whether the current destination meets a recharging condition.

Specifically, the electronic device may determine that the current destination meets the recharging condition, where the recharging condition may be at least one of conditions such as an idle charging pile being present at the current destination and the current destination being a historical recharging location of the target vehicle.

Step d3. When the current destination meets the recharging condition, determine whether the arrival time is within a historical recharging time period range and whether the estimated remaining state of charge is within a historical recharging initial range of remaining state of charge.

Specifically, when the current destination is a historical recharging location of the target vehicle, it is determined that the current destination meets the recharging condition. Alternatively, when an idle charging pile is present at the current destination, it is determined that the current destination meets the recharging condition. When the current destination meets the recharging condition, the electronic device may determine the historical recharging time period range and a historical recharge starting interval based on recharging habits of the user.

The electronic device compares the arrival time with the historical recharging time period range, and compares the estimated remaining state of charge with the historical recharge starting interval.

Step d4. If the arrival time is within the historical recharging time period range and the estimated remaining state of charge is within the historical recharging initial range of remaining state of charge, determine that the target vehicle will be recharged after driving to the current destination.

Specifically, if the arrival time is within the historical recharging time period range and the estimated remaining state of charge is within the historical recharging initial range of remaining state of charge, it is determined that the target vehicle will be recharged after driving to the current destination.

Optionally, when it is determined that the target vehicle will be recharged after driving to the current destination, the electronic device may output a recharging prompt information, where the recharging prompt information is configured to prompt user to perform recharging after arriving at the destination.

Step d5. If the arrival time is not within the historical recharging time period range or/and the estimated remaining state of charge is not within the historical recharging initial range of remaining state of charge, determine that the target vehicle will not be recharged after driving to the current destination.

Specifically, if the arrival time is not within the historical recharging time period range or/and the estimated remaining state of charge is not within the historical recharging initial range of remaining state of charge, it is determined that the target vehicle will not be recharged after driving to the current destination.

Step S303. Determine a destination type corresponding to the current destination based on a current departure date, a current departure time, and the target driving route.

The destination type includes a one-way destination and/or a round-trip destination, and the round-trip destination indicates that the current destination is a destination of the target vehicle in one direction in a round trip.

Specifically, for the step, refer to the description of Step S203 in FIG. 2. Details are not described herein again.

Step S304. Determine an energy management mode corresponding to the target vehicle based on the destination type, a result of determining whether the target vehicle will be recharged after driving to the current destination, and the target driving route.

Specifically, for the step, refer to the description of Step S204 in FIG. 2. Details are not described herein again.

In the energy management method provided in this embodiment, a current place of departure and the current departure time of the target vehicle are obtained, and an arrival time of the target vehicle driving from the current place of departure to the current destination according to the target driving route is determined based on the current departure time, thereby ensuring the accuracy of the determined arrival time. A current remaining state of charge of the target vehicle is obtained. A terrain of the target driving route, an average driving speed of the target vehicle, a current driving mileage corresponding to the target driving route, current ambient temperature information, and in-vehicle electrical device setting information are obtained, and a first trip energy consumption for driving of the target vehicle from the current place of departure to the current destination according to the target driving route is determined based on the terrain, the average driving speed, the current driving mileage, the current ambient temperature information, and the in-vehicle electrical device setting information, thereby ensuring the accuracy of the determined first trip energy consumption. The first trip energy consumption is subtracted from the current remaining state of charge to obtain the estimated remaining state of charge, thereby ensuring the accuracy of the obtained estimated remaining state of charge.

The arrival time, the estimated remaining state of charge, and the current destination are inputted into a recharging behavior prediction model to output a result of whether the target vehicle will be recharged after driving to the current destination by using the recharging behavior prediction model, thereby ensuring the accuracy of the result of whether the target vehicle will be recharged after driving to the current destination.

Alternatively, whether the current destination meets a recharging condition is determined, when the current destination meets the recharging condition, it is determined whether the arrival time is within a historical recharging time period range and whether the estimated remaining state of charge is within a historical recharging initial range of remaining state of charge, and if the arrival time is within the historical recharging time period range and the estimated remaining state of charge is within the historical recharging initial range of remaining state of charge, it is determined that the target vehicle will be recharged after driving to the current destination, thereby ensuring the accuracy of the determined result that the target vehicle will be recharged after driving to the current destination. If the arrival time is not within the historical recharging time period range or/and the estimated remaining state of charge is not within the historical recharging initial range of remaining state of charge, it is determined that the target vehicle will not be recharged after driving to the current destination, thereby ensuring the accuracy of the determined result that the target vehicle will not be recharged after driving to the current destination.

In an optional implementation of the present application, the step of "determining an energy management mode corresponding to the target vehicle based on the destination type, a result of determining whether the target vehicle will be recharged after driving to the current destination, and the target driving route" in the foregoing embodiments may include the following cases.

One case includes: if the current destination is a one-way destination and the target vehicle will not be recharged after driving to the current destination, determining a first trip energy consumption for driving of the target vehicle from a current place of departure to the current destination according to the target driving route;
calculating usable energy that the target vehicle can provide by consumption from a current remaining state of charge to a preset equilibrium state of charge;
if the first trip energy consumption is less than or equal to the usable energy, determining that the energy management mode corresponding to the target vehicle is pure electric driving mode; and
if the first trip energy consumption is greater than the usable energy, determining that the energy management mode corresponding to the target vehicle is hybrid driving mode.

Specifically, if the current destination is a one-way destination and the target vehicle will not be recharged after driving to the current destination, the electronic device may obtain the terrain of the target driving route, the average driving speed of the target vehicle, the current driving mileage corresponding to the target driving route, the current ambient temperature information, and the in-vehicle electrical device setting information. The electronic device determines the first trip energy consumption for driving of the target vehicle from the current place of departure to the current destination according to the target driving route based on the terrain, the average driving speed, the current driving mileage, the current ambient temperature information, and the in-vehicle electrical device setting information.

The electronic device then calculates the usable energy that the target vehicle can provide by consumption from the current remaining state of charge to the preset equilibrium state of charge. The preset equilibrium state of charge may use a state of charge defined in the target vehicle. After the remaining state of charge of the target vehicle reaches the preset equilibrium state of charge, the target vehicle is automatically adjusted to the hybrid driving mode.

The electronic device then compares the first trip energy consumption with the usable energy. If the first trip energy consumption is less than or equal to the usable energy, it is determined that the usable energy that the target vehicle can provide by consumption from the current remaining state of charge to the preset equilibrium state of charge is sufficient to ensure that the target vehicle reaches the current destination, and it is determined that the energy management mode corresponding to the target vehicle is the pure electric driving mode.

If the first trip energy consumption is greater than the usable energy, the electronic device determines that the usable energy that the target vehicle can provide by consumption from the current remaining state of charge to the preset equilibrium state of charge is not sufficient to ensure that the target vehicle reaches the current destination, and therefore the electronic device determines that the energy management mode corresponding to the target vehicle is the hybrid driving mode.
Another case includes: if the current destination is a one-way destination and the target vehicle will be recharged after driving to the current destination, determining a first trip energy consumption for driving of the target vehicle from a current place of departure to the current destination according to the target driving route;
calculating maximum energy that the target vehicle can provide by consumption from a current remaining state of charge to a minimum allowable state of charge;
comparing the first trip energy consumption with the maximum energy;
if the first trip energy consumption is less than or equal to the maximum energy, adjusting a preset equilibrium state of charge corresponding to the target vehicle down to the minimum allowable state of charge, and determining that the energy management mode corresponding to the target vehicle is pure electric driving mode; and
if the first trip energy consumption is greater than the maximum energy, determining that the energy management mode corresponding to the target vehicle is the hybrid driving mode.

Specifically, if the current destination is a one-way destination and the target vehicle will be recharged after driving to the current destination, the electronic device may obtain the terrain of the target driving route, the average driving speed of the target vehicle, the current driving mileage corresponding to the target driving route, the current ambient temperature information, and the in-vehicle electrical device setting information. The electronic device determines the first trip energy consumption for driving of the target vehicle from the current place of departure to the current destination according to the target driving route based on the terrain, the average driving speed, the current driving mileage, the current ambient temperature information, and the in-vehicle electrical device setting information.

Because the target vehicle will be recharged after driving to the current destination, the preset equilibrium state of charge of the target vehicle may be slightly lower, and therefore the electronic device may calculate the maximum energy that the target vehicle can provide by consumption from the current remaining state of charge to the minimum allowable state of charge.

The electronic device then compares the first trip energy consumption with the maximum energy. If the first trip energy consumption is less than or equal to the maximum energy, the electronic device determines that the maximum energy that the target vehicle can provide by consumption from the current remaining state of charge to the minimum allowable state of charge is sufficient to ensure that the target vehicle reaches the current destination, and the electronic device adjusts the preset equilibrium state of charge corresponding to the target vehicle down to the minimum allowable state of charge, and determines that the energy management mode corresponding to the target vehicle is pure electric driving mode.

The preset equilibrium state of charge is a preset value of the target vehicle, and when the current remaining state of charge reaches the preset equilibrium state of charge, the target vehicle is automatically adjusted to hybrid driving mode.

If the first trip energy consumption is greater than the maximum energy, the electronic device determines that the maximum energy that the target vehicle can provide by consumption from the current remaining state of charge to the minimum allowable state of charge is not sufficient to ensure that the target vehicle reaches the current destination, and it is determined that the energy management mode corresponding to the target vehicle is the hybrid driving mode.
Another case includes: if the current destination is a round-trip destination and the target vehicle will not be recharged after driving to the current destination, determining a second trip energy consumption for driving of the target vehicle from a current place of departure to the current destination according to the target driving route and returning from the current destination to the current place of departure;
calculating usable energy that the target vehicle can provide by consumption from a current remaining state of charge to a preset equilibrium state of charge;
if the second trip energy consumption is greater than the usable energy, determining that the energy management mode corresponding to the target vehicle is hybrid driving mode; and
if the second trip energy consumption is less than or equal to the usable energy, determining that the energy management mode corresponding to the target vehicle is pure electric driving mode.

Specifically, if the current destination is a round-trip destination and the target vehicle will not be recharged after driving to the current destination, the electronic device may obtain the terrain of the target driving route, the average driving speed of the target vehicle, the current driving mileage corresponding to the target driving route, the current ambient temperature information, and the in-vehicle electrical device setting information. The electronic device determines the second trip energy consumption for driving of the target vehicle from the current place of departure to the current destination according to the target driving route and returning from the current destination to the current place of departure based on the terrain, the average driving speed, the current driving mileage, the current ambient temperature information, and the in-vehicle electrical device setting information.

The electronic device then calculates the usable energy that the target vehicle can provide by consumption from the current remaining state of charge to the preset equilibrium state of charge. The preset equilibrium state of charge may use a state of charge defined in the target vehicle. After the remaining state of charge of the target vehicle reaches the preset equilibrium state of charge, the hybrid driving mode is activated.

The electronic device then compares the second trip energy consumption with the usable energy. If the second trip energy consumption is greater than or equal to the usable energy, it is determined that the usable energy that the target vehicle can provide by consumption from the current remaining state of charge to the preset equilibrium state of charge is sufficient to ensure that the target vehicle reaches the current destination and then returns from the current destination to the current place of departure, and it is determined that the energy management mode corresponding to the target vehicle is the pure electric driving mode.

If the second trip energy consumption is less than the usable energy, the electronic device determines that the usable energy that the target vehicle can provide by consumption from the current remaining state of charge to the preset equilibrium state of charge is not sufficient to ensure that the target vehicle reaches the current destination and then returns from the current destination to the current place of departure. Therefore, the electronic device determines that the energy management mode corresponding to the target vehicle is the hybrid driving mode.

Another case includes: if the current destination is a round-trip destination and the target vehicle will be recharged after driving to the current destination, determining a first trip energy consumption for driving of the target vehicle from a current place of departure to the current destination according to the target driving route;
calculating maximum energy that the target vehicle can provide by consumption from a current remaining state of charge to a minimum allowable state of charge;
comparing the first trip energy consumption with the maximum energy;
if the first trip energy consumption is less than or equal to the maximum energy, adjusting a preset equilibrium state of charge corresponding to the target vehicle down to the minimum allowable state of charge, and determining that the energy management mode corresponding to the target vehicle is pure electric driving mode; and
if the first trip energy consumption is greater than the maximum energy, determining that the energy management mode corresponding to the target vehicle is the hybrid driving mode.

Specifically, if the current destination is a round-trip destination and the target vehicle will be recharged after driving to the current destination, the electronic device may obtain the terrain of the target driving route, the average driving speed of the target vehicle, the current driving mileage corresponding to the target driving route, the current ambient temperature information, and the in-vehicle electrical device setting information. The electronic device determines the first trip energy consumption for driving of the target vehicle from the current place of departure to the current destination according to the target driving route based on the terrain, the average driving speed, the current driving mileage, the current ambient temperature information, and the in-vehicle electrical device setting information.

Because the target vehicle will be recharged after driving to the current destination, the preset equilibrium state of charge of the target vehicle may be slightly lower, and therefore the electronic device may calculate the maximum energy that the target vehicle can provide by consumption from the current remaining state of charge to the minimum allowable state of charge. In addition, the electronic device does not need to consider the corresponding trip energy consumption of returning from the current destination to the current place of departure. The preset equilibrium state of charge is a preset value of the target vehicle, and when the current remaining state of charge reaches the preset equilibrium state of charge, the target vehicle is automatically adjusted to hybrid driving mode.

The electronic device then compares the first trip energy consumption with the maximum energy. If the first trip energy consumption is less than or equal to the maximum energy, the electronic device determines that the maximum energy that the target vehicle can provide by consumption from the current remaining state of charge to the minimum allowable state of charge is sufficient to ensure that the target vehicle reaches the current destination, and the electronic device adjusts the preset equilibrium state of charge corresponding to the target vehicle down to the minimum allowable state of charge, and determines that the energy management mode corresponding to the target vehicle is pure electric driving mode.

If the first trip energy consumption is greater than the maximum energy, the electronic device determines that the maximum energy that the target vehicle can provide by consumption from the current remaining state of charge to the minimum allowable state of charge is not sufficient to ensure that the target vehicle reaches the current destination, and it is determined that the energy management mode corresponding to the target vehicle is the hybrid driving mode.

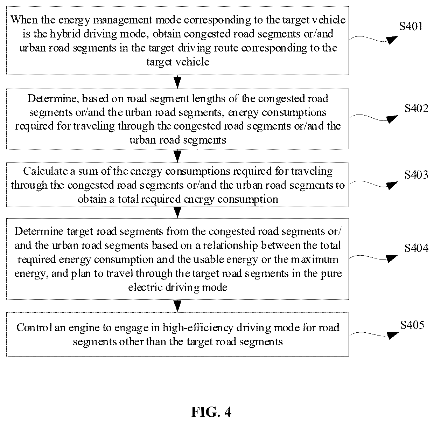

In an optional implementation of the present application, as shown in FIG. 4, when the energy management mode corresponding to the target vehicle is the hybrid driving mode, the foregoing method further includes the following steps.

Step S401. When the energy management mode corresponding to the target vehicle is the hybrid driving mode, obtain congested road segments or/and urban road segments in the target driving route corresponding to the target vehicle.

Specifically, when the energy management mode corresponding to the target vehicle is the hybrid driving mode, the electronic device may obtain congested road segments or/and urban road segments in the target driving route corresponding to the target vehicle based on a communicative connection with the navigation system.

Step S402. Determine, based on road segment lengths of the congested road segments or/and the urban road segments, energy consumptions required for traveling through the congested road segments or/and the urban road segments.

Specifically, the electronic device may obtain an average speed of the target vehicle traveling through the congested road segments or/and the urban road segments. The energy consumptions required for traveling through the congested road segments or/and the urban road segments are then determined based on the average speed of the target vehicle traveling through the congested road segments or/and the urban road segments and road segment lengths of the congested road segments or/and the urban road segments.

Step S403. Calculate a sum of the energy consumptions required for traveling through the congested road segments or/and the urban road segments to obtain a total required energy consumption.

Specifically, the electronic device may calculate the sum of the energy consumptions required for traveling through the congested road segments or/and the urban road segments to obtain the total required energy consumption.

Step S404. Determine target road segments from the congested road segments or/and the urban road segments based on a relationship between the total required energy consumption and the usable energy or the maximum energy, and plan to travel through the target road segments in the pure electric driving mode.

Specifically, the electronic device then compares the total required energy consumption and the usable energy or the maximum energy. When the usable energy or the maximum energy is greater than or equal to the total required energy consumption, the electronic device may determine the congested road segments or/and the urban road segments as the target road segments, and plan to travel through the target road segments in the pure electric driving mode.

When the usable energy or the maximum energy is less than the total required energy consumption, the electronic device may determine the target road segments from the congested road segments or/and the urban road segments based on the energy consumptions required for traveling through the congested road segments or/and the urban road segments or the road segment lengths of the congested road segments or/and the urban road segments, and plan to travel through the target road segments in the pure electric driving mode..

Optionally, the electronic device may determine congested road segments or/and urban road segments whose required energy consumption is greater than a preset required energy consumption as the target road segments. Alternatively, the electronic device arranges the congested road segments or/and urban road segments in descending order of required energy consumptions, sequentially calculates a total required energy consumption of the first N congested road segments or/and urban road segments. When the total required energy consumption is greater than the usable energy or the maximum energy, and determines the first (N-1) congested road segments or/and urban road segment determines as the target road segments.

For example, the electronic device arranges the congested road segments or/and urban road segments in descending order of required energy consumptions, sequentially calculates a required energy consumption of the first congested road segment or urban road segment, then calculates a total required energy consumption of the first and second congested road segments or/and urban road segments, and calculates a total required energy consumption of the first, second, and third congested road segments or/and urban road segments. The total required energy consumption calculated each time is compared with the usable energy or the maximum energy. When a total required energy consumption corresponding to the first N congested road segments or/and urban road segments is greater than the usable energy or the maximum energy, the first (N-1) congested road segments or/and urban road segments are determined as the target road segments.

Optionally, the electronic device may alternatively determine congested road segments or/and urban road segments whose road segment length is greater than a preset road segment length as the target road segments. Alternatively, the electronic device arranges the congested road segments or/and urban road segments in descending order of road segment lengths, and sequentially calculates a total required energy consumption of the first N congested road segments or/and urban road segments. When the total required energy consumption is greater than the usable energy or the maximum energy, the first (N-1) congested road segments or/and urban road segments are determined as the target road segments.

Step S405. Control an engine to engage in high-efficiency driving mode for road segments other than the target road segments.

Specifically, the electronic device may control the engine to engage in the high-efficiency driving mode for the road segments other than the target road segments.

In the energy management method provided in the embodiments of the present application, if the current destination is a one-way destination and the target vehicle will not be recharged after driving to the current destination, a first trip energy consumption for driving of the target vehicle from a current place of departure to the current destination according to the target driving route is determined, thereby ensuring the accuracy of the determined first trip energy consumption. Usable energy that the target vehicle can provide by consumption from a current remaining state of charge to a preset equilibrium state of charge is calculated, thereby ensuring the accuracy of the calculated usable energy. If the first trip energy consumption is less than or equal to the usable energy, it is determined that the energy management mode corresponding to the target vehicle is pure electric driving mode, thereby ensuring the accuracy of the determined energy management mode corresponding to the target vehicle being the pure electric driving mode. If the first trip energy consumption is greater than the usable energy, it is determined that the energy management mode corresponding to the target vehicle is hybrid driving mode, thereby ensuring the accuracy of the determined energy management mode corresponding to the target vehicle being the hybrid driving mode. In this way, an optimal full-trip energy consumption is achieved while the driving experience is ensured.

If the current destination is a one-way destination and the target vehicle will be recharged after driving to the current destination, a first trip energy consumption for driving of the target vehicle from a current place of departure to the current destination according to the target driving route is determined, thereby ensuring the accuracy of the determined first trip energy consumption. Maximum energy that the target vehicle can provide by consumption from a current remaining state of charge to a minimum allowable state of charge is calculated, thereby ensuring the accuracy of the calculated maximum energy. The first trip energy consumption is compared with the maximum energy, and if the first trip energy consumption is less than or equal to the maximum energy, a preset equilibrium state of charge corresponding to the target vehicle is adjusted down to the minimum allowable state of charge, and it is determined that the energy management mode corresponding to the target vehicle is pure electric driving mode, thereby ensuring the accuracy of the determined energy management mode corresponding to the target vehicle being the pure electric driving mode. If the first trip energy consumption is greater than the maximum energy, it is determined that the energy management mode corresponding to the target vehicle is the hybrid driving mode. The accuracy of the determined energy management mode corresponding to the target vehicle being the hybrid driving mode is ensured. In this way, an optimal full-trip energy consumption is achieved while the driving experience is ensured.

If the current destination is a round-trip destination and the target vehicle will not be recharged after driving to the current destination, a second trip energy consumption for driving of the target vehicle from a current place of departure to the current destination according to the target driving route and returning from the current destination to the current place of departure is determined, thereby ensuring the accuracy of the calculated second trip energy consumption. Usable energy that the target vehicle can provide by consumption from a current remaining state of charge to a preset equilibrium state of charge is calculated, thereby ensuring the accuracy of the calculated usable energy. If the second trip energy consumption is greater than the usable energy, it is determined that the energy management mode corresponding to the target vehicle is hybrid driving mode, thereby ensuring the accuracy of the determined energy management mode corresponding to the target vehicle being the hybrid driving mode. If the second trip energy consumption is less than or equal to the usable energy, it is determined that the energy management mode corresponding to the target vehicle is pure electric driving mode, thereby ensuring the accuracy of the determined energy management mode corresponding to the target vehicle being the pure electric driving mode. In this way, an optimal full-trip energy consumption is achieved while the driving experience is ensured.

If the current destination is a round-trip destination and the target vehicle will be recharged after driving to the current destination, a first trip energy consumption for driving of the target vehicle from a current place of departure to the current destination according to the target driving route is determined, thereby ensuring the accuracy of the calculated first trip energy consumption. Maximum energy that the target vehicle can provide by consumption from a current remaining state of charge to a minimum allowable state of charge is calculated, thereby ensuring the accuracy of the calculated maximum energy. The first trip energy consumption is compared with the maximum energy, and if the first trip energy consumption is less than or equal to the maximum energy, a preset equilibrium state of charge corresponding to the target vehicle is adjusted down to the minimum allowable state of charge, and it is determined that the energy management mode corresponding to the target vehicle is pure electric driving mode, thereby ensuring the accuracy of the determined energy management mode corresponding to the target vehicle being the pure electric driving mode. If the first trip energy consumption is greater than the maximum energy, it is determined that the energy management mode corresponding to the target vehicle is the hybrid driving mode, thereby ensuring the accuracy of the determined energy management mode corresponding to the target vehicle being the hybrid driving mode.

In addition, when the energy management mode corresponding to the target vehicle is the hybrid driving mode, congested road segments or/and urban road segments in the target driving route corresponding to the target vehicle are obtained, and energy consumptions required for traveling through the congested road segments or/and the urban road segments are determined based on road segment lengths of the congested road segments or/and the urban road segments, thereby ensuring the accuracy of the determined required energy consumptions. Target road segments are determined from the congested road segments or/and the urban road segments based on a relationship between the total required energy consumption and the usable energy or the maximum energy, and it is planned to travel through the target road segments in the pure electric driving mode, thereby ensuring the accuracy of the determined target road segments. controlling an engine to engage in high-efficiency driving mode for road segments other than the target road segments. In this way, an optimal full-trip energy consumption is achieved while the driving experience is ensured.

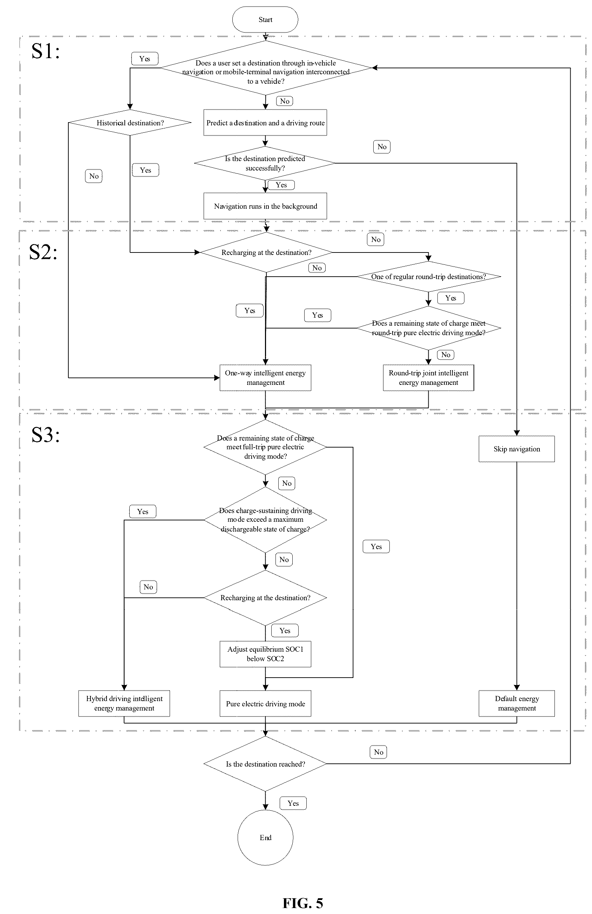

To describe the energy management method provided in the embodiments of the present application more clearly, embodiments of the present application further provide a flowchart of an energy management method. As shown in FIG. 5, the energy management method may include the following steps.
S1. Predict and determine a navigation implementation mode based on operations of a user, a travel destination, and a travel route:
   1) if the user sets a destination and a driving route through in-vehicle navigation or mobile-terminal navigation interconnected to a vehicle, performing intelligent energy management based on a navigation route set by the user:
      (1). if a navigation destination is not a historical destination in a database, directly using a one-way trip to perform intelligent energy management; and
      (2). if the navigation destination is a historical destination in the database, performing S2: determining a mileage calculated by intelligent energy management.
   2) if the user does not set a destination and a driving route through the in-vehicle navigation or the mobile-terminal navigation interconnected to the vehicle, predicting a driving destination and a driving route using a destination prediction system:
      (1). if the prediction succeeds, with the authorization by the user, running the in-vehicle navigation in the background to perform intelligent energy management; and
      (2). if the prediction fails, skipping navigation, and performing energy management based on a default strategy.
S2: Determine, based on the destination of the user, travel habit prediction, recharging behavior prediction, full-trip energy consumption prediction, and a current state of charge of a traction battery, the mileage calculated by intelligent energy management:
   1) when:
      (1). no recharging is required for a one-way destination;
      (2). a current trip is a trip in a direction of a regular round trip; and
      (3). a remaining state of charge does not meet round-trip pure electric driving mode;
      if all the foregoing conditions are met, a total round trip is used to perform intelligent energy management;
   2) when:
      (1). recharging is required for a one-way destination;
      (2). a current trip is not a trip in a direction of a regular round trip; and
      (3). a remaining state of charge meets round-trip pure electric driving mode;
   if any of the foregoing conditions is met, a one-way trip is used to perform intelligent energy management.
S3: Determine a driving form and an energy management strategy based on the recharging behavior prediction, the full-trip energy consumption prediction, the current state of charge of the traction battery, information such as a total mileage, a terrain provided by navigation, and traffic conditions, and perform intelligent energy management:
   1) when the remaining state of charge meets a full-trip pure electric driving mode, i.e., full-trip required energy ≤ energy that the traction battery can provide by consumption to an equilibrium state of charge (SOC1) in the pure electric driving mode, performing the full-trip pure electric driving mode;
   2) when charge-sustaining driving mode does not exceed a maximum dischargeable state of charge, i.e., the energy that the traction battery can provide by consumption to the equilibrium state of charge (SOC1) in the pure electric driving mode < the full-trip required energy ≤ energy that the traction battery can provide by consumption to a minimum allowable state of charge (SOC2) in the pure electric driving mode, and recharging is to be performed at the destination, performing the full-trip pure electric driving mode with the equilibrium state of charge decreased; and
   3) when charge-sustaining driving exceeds the maximum dischargeable state of charge, i.e., the full-trip required energy > the energy that the traction battery can provide by consumption to the minimum allowable state of charge (SOC2) in the pure electric driving mode, or recharging is not to be performed after the destination is reached through charge-sustaining driving, performing a hybrid driving strategy, and performing energy management based on a traffic status (clear or congested) provided by navigation: when it is recognized that a congested road segment or an urban road segment is present ahead, estimating a state of charge required for traveling through the congested road segment or the urban road segment ahead in the pure electric driving mode, and recharging the traction battery to a required state of charge in advance in a high-efficiency running zone on a clear high-speed road segment using an engine. Generally, the pure electric driving mode is performed for a congested road segment or an urban road segment, the engine is engaged in high-efficiency driving mode on a clear road segment, and the state of charge of the traction battery exactly reaches the equilibrium state of charge when the destination is reached, so that while driving experience is ensured, the optimal full-trip energy consumption is achieved.

This embodiment further provides an energy management apparatus. The apparatus is configured to implement the foregoing embodiments and optional embodiments, and content that has been described is no longer repeated. As used herein, the term "module" refers to a combination of software and/or hardware configured to implement a predetermined function. Although the apparatus described in the following embodiments is preferably implemented in software, implementation via hardware, or a combination of software and hardware is also possible and contemplated.

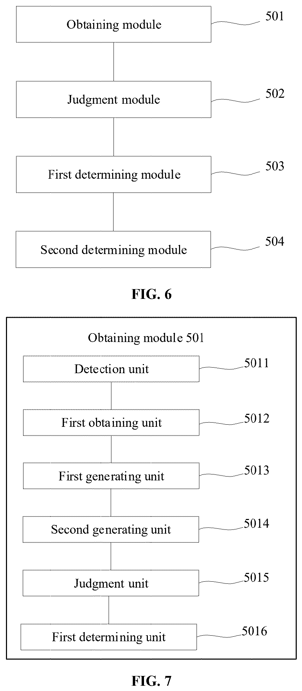

This embodiment provides an energy management apparatus. As shown in FIG. 6, the apparatus includes:
an obtaining module 501, configured to obtain a current destination corresponding to a target vehicle and a corresponding target driving route for driving to the current destination;
a judgment module 502, configured to determine, based on a relationship between the current destination and the target driving route, whether the target vehicle will be recharged after driving to the current destination;
a first determining module 503, configured to determine a destination type corresponding to the current destination based on a current departure date, a current departure time, and the target driving route, where the destination type includes a one-way destination and/or a round-trip destination, and the round-trip destination indicates that the current destination is a destination of the target vehicle in one direction in a round trip; and
a second determining module 504, configured to determine an energy management mode corresponding to the target vehicle based on the destination type, a result of determining whether the target vehicle will be recharged after driving to the current destination, and the target driving route.

In some optional implementations, as shown in FIG. 7, the obtaining module 501 includes:
a detection unit 5011, configured to detect whether navigation functionality is activated in the target vehicle;
a first obtaining unit 5012, configured to obtain a current place of departure, the current departure date, and the current departure time corresponding to the target vehicle if the navigation functionality is not activated in the target vehicle;
a first generating unit 5013, configured to generate a predicted destination corresponding to the target vehicle based on a relationship among the current place of departure, the current departure date, and the current departure time;
a second generating unit 5014, configured to generate a predicted driving route for driving of the target vehicle from the current place of departure to the predicted destination based on a relationship among the predicted destination, the current place of departure, the current departure date, and the current departure time;
a judgment unit 5015, configured to determine whether the predicted destination and the predicted driving route are accurate; and
a first determining unit 5016, configured to: if the predicted destination and the predicted driving route are accurate, determine the predicted destination to be the current destination, and determine the predicted driving route to be the target driving route.

In some optional implementations, the first generating unit 5013 is configured to input the current place of departure, the current departure date, and the current departure time into a destination prediction model, and perform, by using the destination prediction model, feature extraction on the current place of departure, the current departure date, and the current departure time to output the predicted destination, where the destination prediction model is obtained by training based on a plurality of first historical user travel routes, each of the first historical user travel routes includes a first historical place of departure, a first historical destination, a first historical departure date, and a first historical departure time, and the first historical destination is used as first label information.

In some optional implementations, the second generating unit 5014 is configured to: determine current traffic conditions for optional routes from the current place of departure to the predicted destination on the current departure date and at the current departure time based on the relationship among the predicted destination, the current place of departure, the current departure date, and the current departure time; obtain current travel weather; and input the current travel weather, the current place of departure, the predicted destination, the optional routes, and the current traffic conditions corresponding to the optional routes into a travel route prediction model to output the predicted driving route corresponding to the predicted destination, where the travel route prediction model is obtained by training based on a plurality of second historical user travel routes, each of the second historical user travel routes includes a second historical place of departure, a second historical destination, a second historical travel weather, a second historical driving route from the second historical place of departure to the second historical destination, and a historical traffic condition of the second historical driving route, and the second historical driving route is used as second label information.

In some optional implementations, the judgment unit 5015 is configured to display the predicted destination and the predicted driving route to a user, and receive a first instruction inputted by the user; and determine, based on the first instruction, whether the predicted destination and the predicted driving route are accurate.

In some optional implementations, the second generating unit 5014 is configured to: receive the current destination inputted by a user if the predicted destination or the predicted driving route is not accurate; input the current travel weather, the current place of departure, the current destination, and the current traffic conditions corresponding to the optional routes into the travel route prediction model to output a candidate driving route corresponding to the current destination; and correct the candidate driving route in real time based on current location information of the target vehicle to obtain the target driving route.

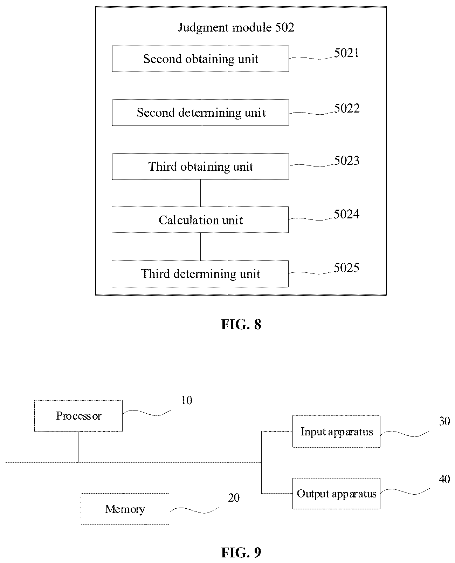

In some optional implementations, as shown in FIG. 8, the judgment module 502 includes:
a second obtaining unit 5021, configured to obtain a current place of departure and the current departure time of the target vehicle;
a second determining unit 5022, configured to determine, based on the current departure time, an arrival time of the target vehicle driving from the current place of departure to the current destination according to the target driving route;
a third obtaining unit 5023, configured to obtain a current remaining state of charge of the target vehicle;
a calculation unit 5024, configured to calculate, based on the current remaining state of charge of the target vehicle, an estimated remaining state of charge of the target vehicle after driving to the current destination; and
a third determining unit 5025, configured to determine, based on the arrival time, the estimated remaining state of charge, and the current destination, whether the target vehicle will be recharged after driving to the current destination.

In some optional implementations, the calculation unit 5024 is configured to obtain a terrain of the target driving route, an average driving speed of the target vehicle, a current driving mileage corresponding to the target driving route, current ambient temperature information, and in-vehicle electrical device setting information; determine a first trip energy consumption for driving of the target vehicle from the current place of departure to the current destination according to the target driving route based on the terrain, the average driving speed, the current driving mileage, the current ambient temperature information, and the in-vehicle electrical device setting information; and subtract the first trip energy consumption from the current remaining state of charge to obtain the estimated remaining state of charge.

In some optional implementations, the third determining unit 5025 is configured to input the arrival time, the estimated remaining state of charge, and the current destination into a recharging behavior prediction model to output a result of whether the target vehicle will be recharged after driving to the current destination by using the recharging behavior prediction model; when the current destination meets a recharging condition, determine whether the arrival time is within a historical recharging time period range and whether the estimated remaining state of charge is within a historical recharging initial range of remaining state of charge; and determine, based on a determining result, whether the target vehicle will be recharged after driving to the current destination.

In some optional implementations, the third determining unit 5025 is configured to: if the arrival time is within the historical recharging time period range and the estimated remaining state of charge is within the historical recharging initial range of remaining state of charge, determine that the target vehicle will be recharged after driving to the current destination; and if the arrival time is not within the historical recharging time period range or/and the estimated remaining state of charge is not within the historical recharging initial range of remaining state of charge, determine that the target vehicle will not be recharged after driving to the current destination.

In some optional implementations, the second determining module 504 is configured to: if the current destination is a one-way destination and the target vehicle will not be recharged after driving to the current destination, determine a first trip energy consumption for driving of the target vehicle from a current place of departure to the current destination according to the target driving route; calculate usable energy that the target vehicle can provide by consumption from a current remaining state of charge to a preset equilibrium state of charge; if the first trip energy consumption is less than or equal to the usable energy, determine that the energy management mode corresponding to the target vehicle is pure electric driving mode; and if the first trip energy consumption is greater than the usable energy, determine that the energy management mode corresponding to the target vehicle is hybrid driving mode.

In some optional implementations, the second determining module 504 is configured to: if the current destination is a one-way destination and the target vehicle will be recharged after driving to the current destination, determine a first trip energy consumption for driving of the target vehicle from a current place of departure to the current destination according to the target driving route; calculate maximum energy that the target vehicle can provide by consumption from a current remaining state of charge to a minimum allowable state of charge; compare the first trip energy consumption with the maximum energy; if the first trip energy consumption is less than or equal to the maximum energy, adjust a preset equilibrium state of charge corresponding to the target vehicle down to the minimum allowable state of charge, and determine that the energy management mode corresponding to the target vehicle is pure electric driving mode; and if the first trip energy consumption is greater than the maximum energy, determine that the energy management mode corresponding to the target vehicle is the hybrid driving mode.

In some optional implementations, the second determining module 504 is configured to: if the current destination is a round-trip destination and the target vehicle will not be recharged after driving to the current destination, determine a second trip energy consumption for driving of the target vehicle from a current place of departure to the current destination according to the target driving route and returning from the current destination to the current place of departure; calculate usable energy that the target vehicle can provide by consumption from a current remaining state of charge to a preset equilibrium state of charge; if the second trip energy consumption is greater than the usable energy, determine that the energy management mode corresponding to the target vehicle is hybrid driving mode; and if the second trip energy consumption is less than or equal to the usable energy, determine that the energy management mode corresponding to the target vehicle is pure electric driving mode.

In some optional implementations, the second determining module 504 is configured to: if the current destination is a round-trip destination and the target vehicle will be recharged after driving to the current destination, determine a first trip energy consumption for driving of the target vehicle from a current place of departure to the current destination according to the target driving route; calculate maximum energy that the target vehicle can provide by consumption from a current remaining state of charge to a minimum allowable state of charge; compare the first trip energy consumption with the maximum energy; if the first trip energy consumption is less than or equal to the maximum energy, adjust a preset equilibrium state of charge corresponding to the target vehicle down to the minimum allowable state of charge, and determine that the energy management mode corresponding to the target vehicle is pure electric driving mode; and if the first trip energy consumption is greater than the maximum energy, determine that the energy management mode corresponding to the target vehicle is the hybrid driving mode.

In some optional implementations, the second determining module 504 is further configured to: when the energy management mode corresponding to the target vehicle is the hybrid driving mode, obtain congested road segments or/and urban road segments in the target driving route corresponding to the target vehicle; determine, based on road segment lengths of the congested road segments or/and the urban road segments, energy consumptions required for traveling through the congested road segments or/and the urban road segments; calculate a sum of the energy consumptions required for traveling through the congested road segments or/and the urban road segments to obtain a total required energy consumption; determine target road segments from the congested road segments or/and the urban road segments based on a relationship between the total required energy consumption and the usable energy or the maximum energy, and plan to travel through the target road segments in the pure electric driving mode; and control an engine to engage in high-efficiency driving mode for road segments other than the target road segments.

The energy management apparatus in this embodiment is presented in the form of a functional unit. The unit refers to an ASIC circuit, a processor and a memory executing one or more software or fixed programs, and/or other devices that can provide the above functions.

Further functional descriptions of each of the above modules and units are identical to the corresponding embodiments described above, and details are not described herein again.

Embodiments of the present application further provide an electronic device, including the foregoing energy management apparatus shown in FIG. 6 to FIG. 8.

FIG. 9 is a schematic structural diagram of an electronic device according to an optional embodiment of the present application. As shown in FIG. 9, the electronic device includes one or more processors 10, a memory 20, and interfaces for connecting components, including high-speed and low-speed interfaces. The components are communicatively connected to each other by different buses and may be installed on a common motherboard or installed in other configurations as required The processor executes instructions within the electronic device, including instructions stored in or on the memory to display graphical information for a GUI on an external input/output apparatus (e.g., a display device coupled to the interfaces). In some optional embodiments, multiple processors and/or multiple buses may be employed with multiple memories when necessary. Similarly, multiple electronic devices may be connected, each providing part of necessary operations (e.g., as a server array, a blade server group, or a multiprocessor system). One processor 10 is used as an example in FIG. 9.

The processor 10 may be a central processing unit, a network processor, or a combination thereof. The processor 10 may include a hardware chip. The aforementioned hardware chip may be an application-specific integrated circuit, a programmable logic device, or a combination thereof. The programmable logic device may be a complex programmable logic device, a field-programmable gate array, a generic array logic, or any combination thereof.

The memory 20 stores instructions executable by at least one processor 10, enabling the at least one processor 10 to perform the methods shown in the aforementioned embodiments.

The memory 20 may include a program storage area and a data storage area. The program storage area may store an operating system and an application required for at least one function. The data storage area may store data created according to the use of an electronic device for displaying a mini program landing page and the like. Moreover, the memory 20 may include a high-speed random access memory (RAM), and may further include a non-transitory memory, for example, at least one magnetic disk storage device, flash storage device, or other non-transitory solid state storage device. In some optional embodiments, the memory 20 optionally includes memories disposed remotely with respect to the processor 10. These remote memories may be connected to the electronic device by a network. An example of the foregoing network includes, but is not limited to, the internet, an intranet, a local area network, a mobile communication network, and a combination thereof.

The memory 20 may include a volatile memory, for example, a random access memory; the memory may further include a non-volatile memory, for example, a flash memory, a hard disk drive, or a solid-state drive; and the memory 20 may further include a combination of the aforementioned types of memories.

The electronic device further includes an input apparatus 30 and an output apparatus 40. The processor 10, the memory 20, the input apparatus 30, and the output apparatus 40 may be connected through a bus or in another manner. In FIG. 9, for example, a bus connection is used.

The input apparatus 30 may receive inputted numeric or character information and generate key signal inputs related to user settings and functional control of the electronic device, and is, for example, a touchscreen, a keypad, a mouse, a trackpad, a touchpad, a pointing stick, one or more mouse buttons, a trackball, or a joystick. The output apparatus 40 may include a display device, an auxiliary lighting apparatus (e.g., an LED), a haptic feedback apparatus (e.g., a vibration motor), and the like. The aforementioned display device includes, but is not limited to, a liquid crystal display, a light-emitting diode, a display, and a plasma display. In some optional implementations, the display device may be a touchscreen.

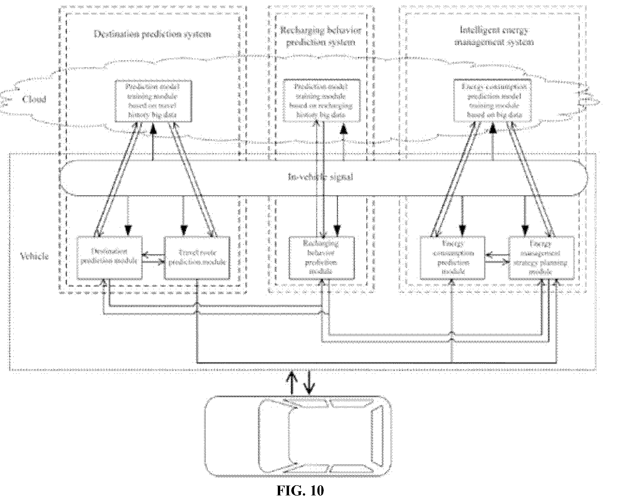

Embodiments of the present application further provide an intelligent vehicle, including an intelligent vehicle body and an electronic device, where the electronic device is configured to perform the energy management method of any one of the implementations. FIG. 10 is an architectural diagram of an electronic device performing an energy management method in an intelligent vehicle. As shown in FIG. 10, a terminal-side electronic device may predict a current destination using a destination prediction module, and predict a target travel route using a travel route prediction module. Whether a target vehicle will be recharged after driving to the current destination is then determined based on the current destination and the target travel route using a recharging behavior prediction model. Energy consumption prediction is performed using an energy consumption prediction model, and an energy management strategy is planned based on the energy consumption prediction. In addition, an energy consumption of the target vehicle may be further predicted again based on the energy management strategy planned based on the energy consumption prediction.

Embodiments of the present application further provide a computer-readable storage medium. The methods according to the embodiments of the present application may be implemented in hardware or firmware, or may be implemented as computer code recorded on a storage medium, or implemented as computer code that is downloadable via a network, originally stored in a remote storage medium or non-transitory machine-readable storage medium, and subsequently stored in a local storage medium. Thus, the methods described herein may be processed by such software stored on a storage medium utilizing general-purpose computers, dedicated processors, or programmable/dedicated hardware. The storage medium may be a magnetic disk, an optical disc, a read-only memory, a random access memory, a flash memory, a hard disk drive, or a solid-state drive; optionally, the storage medium may further include combinations of the aforementioned types of memories. It should be understood that computers, processors, microprocessor controllers, or programmable hardware include storage components capable of storing or receiving software or computer code. When accessed and executed by the computers, processors, or hardware, the software or computer code implements the methods illustrated in the above embodiments.

Although the embodiments of the present application are described in conjunction with the accompanying drawings, various modifications and variations may be made by those skilled in the art without departing from the spirit and scope of the present application, and such modifications and variations fall within the scope defined by the appended claims.

## Claims

1. An energy management method, wherein the method comprises:
obtaining a current destination corresponding to a target vehicle and a corresponding target driving route for driving to the current destination;
determining, based on a relationship between the current destination and the target driving route, whether the target vehicle will be recharged after driving to the current destination;
determining a destination type corresponding to the current destination based on a current departure date, a current departure time, and the target driving route, wherein the destination type comprises a one-way destination and/or a round-trip destination, and the round-trip destination indicates that the current destination is a destination of the target vehicle in one direction in a round trip; and
determining an energy management mode corresponding to the target vehicle based on the destination type, a result of determining whether the target vehicle will be recharged after driving to the current destination, and the target driving route.

2. The method according to claim 1, wherein the step of obtaining a current destination corresponding to a target vehicle and a corresponding target driving route for driving to the current destination comprises:
detecting whether navigation functionality is activated in the target vehicle;
obtaining a current place of departure, the current departure date, and the current departure time corresponding to the target vehicle if the navigation functionality is not activated in the target vehicle;
generating a predicted destination corresponding to the target vehicle based on a relationship among the current place of departure, the current departure date, and the current departure time;
generating a predicted driving route for driving of the target vehicle from the current place of departure to the predicted destination based on a relationship among the predicted destination, the current place of departure, the current departure date, and the current departure time;
determining whether the predicted destination and the predicted driving route are accurate; and
if the predicted destination and the predicted driving route are accurate, determining the predicted destination to be the current destination, and determining the predicted driving route to be the target driving route.

3. The method according to claim 2, wherein the step of generating a predicted destination corresponding to the target vehicle based on a relationship among the current place of departure, the current departure date, and the current departure time comprises:
inputting the current place of departure, the current departure date, and the current departure time into a destination prediction model, and performing, by using the destination prediction model, feature extraction on the current place of departure, the current departure date, and the current departure time to output the predicted destination, wherein the destination prediction model is obtained by training based on a plurality of first historical user travel routes, each of the first historical user travel routes comprises a first historical place of departure, a first historical destination, a first historical departure date, and a first historical departure time, and the first historical destination is used as first label information.

4. The method according to claim 2, wherein the step of generating a predicted driving route for driving of the target vehicle from the current place of departure to the predicted destination based on a relationship among the predicted destination, the current place of departure, the current departure date, and the current departure time comprises:
determining current traffic conditions for optional routes from the current place of departure to the predicted destination on the current departure date and at the current departure time based on the relationship among the predicted destination, the current place of departure, the current departure date, and the current departure time;
obtaining current travel weather; and
inputting the current travel weather, the current place of departure, the predicted destination, the optional routes, and the current traffic conditions corresponding to the optional routes into a travel route prediction model to output the predicted driving route corresponding to the predicted destination, wherein the travel route prediction model is obtained by training based on a plurality of second historical user travel routes, each of the second historical user travel routes comprises a second historical place of departure, a second historical destination, a second historical travel weather, a second historical driving route from the second historical place of departure to the second historical destination, and a historical traffic condition of the second historical driving route, and the second historical driving route is used as second label information.

5. The method according to claim 2, wherein the step of determining whether the predicted destination and the predicted driving route are accurate comprises:
displaying the predicted destination and the predicted driving route to a user, and receiving a first instruction inputted by the user; and
determining, based on the first instruction, whether the predicted destination and the predicted driving route are accurate.

6. The method according to claim 4, wherein the method further comprises:
receiving the current destination inputted by a user if the predicted destination or the predicted driving route is not accurate;
inputting the current travel weather, the current place of departure, the current destination, and the current traffic conditions corresponding to the optional routes into the travel route prediction model to output a candidate driving route corresponding to the current destination; and
correcting the candidate driving route in real time based on current location information of the target vehicle to obtain the target driving route.

7. The method according to claim 1, wherein the step of determining, based on a relationship between the current destination and the target driving route, whether the target vehicle will be recharged after driving to the current destination comprises:
obtaining a current place of departure and the current departure time of the target vehicle;
determining, based on the current departure time, an arrival time of the target vehicle driving from the current place of departure to the current destination according to the target driving route;
obtaining a current remaining state of charge of the target vehicle;
calculating, based on the current remaining state of charge of the target vehicle, an estimated remaining state of charge of the target vehicle after driving to the current destination; and
determining, based on the arrival time, the estimated remaining state of charge, and the current destination, whether the target vehicle will be recharged after driving to the current destination.

8. The method according to claim 7, wherein the step of calculating, based on the current remaining state of charge of the target vehicle, an estimated remaining state of charge of the target vehicle after driving to the current destination comprises:
obtaining a terrain of the target driving route, an average driving speed of the target vehicle, a current driving mileage corresponding to the target driving route, current ambient temperature information, and in-vehicle electrical device setting information;
determining a first trip energy consumption for driving of the target vehicle from the current place of departure to the current destination according to the target driving route based on the terrain, the average driving speed, the current driving mileage, the current ambient temperature information, and the in-vehicle electrical device setting information; and
subtracting the first trip energy consumption from the current remaining state of charge to obtain the estimated remaining state of charge.

9. The method according to claim 7, wherein the step of determining, based on the arrival time, the estimated remaining state of charge, and the current destination, whether the target vehicle will be recharged after driving to the current destination comprises:
inputting the arrival time, the estimated remaining state of charge, and the current destination into a recharging behavior prediction model to output a result of whether the target vehicle will be recharged after driving to the current destination by using the recharging behavior prediction model, wherein the recharging behavior prediction model is obtained by training based on historical recharging places, historical recharging time periods, and historical recharging initial ranges of remaining state of charge.

10. The method according to claim 7, wherein the step of determining, based on the arrival time, the estimated remaining state of charge, and the current destination, whether the target vehicle will be recharged after driving to the current destination comprises:
determining whether the current destination meets a recharging condition;
when the current destination meets the recharging condition, determining whether the arrival time is within a historical recharging time period range and whether the estimated remaining state of charge is within a historical recharging initial range of remaining state of charge;
if the arrival time is within the historical recharging time period range and the estimated remaining state of charge is within the historical recharging initial range of remaining state of charge, determining that the target vehicle will be recharged after driving to the current destination; and
if the arrival time is not within the historical recharging time period range or/and the estimated remaining state of charge is not within the historical recharging initial range of remaining state of charge, determining that the target vehicle will not be recharged after driving to the current destination.

11. The method according to claim 1, wherein the step of determining an energy management mode corresponding to the target vehicle based on the destination type, a result of determining whether the target vehicle will be recharged after driving to the current destination, and the target driving route comprises:
if the current destination is a one-way destination and the target vehicle will not be recharged after driving to the current destination, determining a first trip energy consumption for driving of the target vehicle from a current place of departure to the current destination according to the target driving route;
calculating usable energy that the target vehicle can provide by consumption from a current remaining state of charge to a preset equilibrium state of charge;
if the first trip energy consumption is less than or equal to the usable energy, determining that the energy management mode corresponding to the target vehicle is pure electric driving mode; and
if the first trip energy consumption is greater than the usable energy, determining that the energy management mode corresponding to the target vehicle is hybrid driving mode.

12. The method according to claim 1, wherein the step of determining an energy management mode corresponding to the target vehicle based on the destination type, a result of determining whether the target vehicle will be recharged after driving to the current destination, and the target driving route comprises:
if the current destination is a one-way destination and the target vehicle will be recharged after driving to the current destination, determining a first trip energy consumption for driving of the target vehicle from a current place of departure to the current destination according to the target driving route;
calculating maximum energy that the target vehicle can provide by consumption from a current remaining state of charge to a minimum allowable state of charge;
comparing the first trip energy consumption with the maximum energy;
if the first trip energy consumption is less than or equal to the maximum energy, adjusting a preset equilibrium state of charge corresponding to the target vehicle down to the minimum allowable state of charge, and determining that the energy management mode corresponding to the target vehicle is pure electric driving mode, wherein the preset equilibrium state of charge is a preset value of the target vehicle, and when the current remaining state of charge reaches the preset equilibrium state of charge, the target vehicle is automatically adjusted to hybrid driving mode; and
if the first trip energy consumption is greater than the maximum energy, determining that the energy management mode corresponding to the target vehicle is the hybrid driving mode.

13. The method according to claim 1, wherein the step of determining an energy management mode corresponding to the target vehicle based on the destination type, a result of determining whether the target vehicle will be recharged after driving to the current destination, and the target driving route comprises:
if the current destination is a round-trip destination and the target vehicle will not be recharged after driving to the current destination, determining a second trip energy consumption for driving of the target vehicle from a current place of departure to the current destination according to the target driving route and returning from the current destination to the current place of departure;
calculating usable energy that the target vehicle can provide by consumption from a current remaining state of charge to a preset equilibrium state of charge;
if the second trip energy consumption is greater than the usable energy, determining that the energy management mode corresponding to the target vehicle is hybrid driving mode; and
if the second trip energy consumption is less than or equal to the usable energy, determining that the energy management mode corresponding to the target vehicle is pure electric driving mode.

14. The method according to claim 1, wherein the step of determining an energy management mode corresponding to the target vehicle based on the destination type, a result of determining whether the target vehicle will be recharged after driving to the current destination, and the target driving route comprises:
if the current destination is a round-trip destination and the target vehicle will be recharged after driving to the current destination, determining a first trip energy consumption for driving of the target vehicle from a current place of departure to the current destination according to the target driving route;
calculating maximum energy that the target vehicle can provide by consumption from a current remaining state of charge to a minimum allowable state of charge;
comparing the first trip energy consumption with the maximum energy;
if the first trip energy consumption is less than or equal to the maximum energy, adjusting a preset equilibrium state of charge corresponding to the target vehicle down to the minimum allowable state of charge, and determining that the energy management mode corresponding to the target vehicle is pure electric driving mode, wherein the preset equilibrium state of charge is a preset value of the target vehicle, and when the current remaining state of charge reaches the preset equilibrium state of charge, the target vehicle is automatically adjusted to hybrid driving mode; and
if the first trip energy consumption is greater than the maximum energy, determining that the energy management mode corresponding to the target vehicle is the hybrid driving mode.

15. The method according to any one of claims 11 to 14, wherein the method further comprises: when the energy management mode corresponding to the target vehicle is the hybrid driving mode, obtaining congested road segments or/and urban road segments in the target driving route corresponding to the target vehicle;
determining, based on road segment lengths of the congested road segments or/and the urban road segments, energy consumptions required for traveling through the congested road segments or/and the urban road segments;
calculating a sum of the energy consumptions required for traveling through the congested road segments or/and the urban road segments to obtain a total required energy consumption;
determining target road segments from the congested road segments or/and the urban road segments based on a relationship between the total required energy consumption and the usable energy or the maximum energy, and planning to travel through the target road segments in the pure electric driving mode; and
controlling an engine to engage in high-efficiency driving mode for road segments other than the target road segments.

16. An energy management apparatus, wherein the apparatus comprises:
an obtaining module, configured to obtain a current destination corresponding to a target vehicle and a corresponding target driving route for driving to the current destination;
a judgment module, configured to determine, based on a relationship between the current destination and the target driving route, whether the target vehicle will be recharged after driving to the current destination;
a first determining module, configured to determine a destination type corresponding to the current destination based on a current departure date, a current departure time, and the target driving route, wherein the destination type comprises a one-way destination and/or a round-trip destination, and the round-trip destination indicates that the current destination is a destination of the target vehicle in one direction in a round trip; and
a second determining module, configured to determine an energy management mode corresponding to the target vehicle based on the destination type, a result of determining whether the target vehicle will be recharged after driving to the current destination, and the target driving route.

17. The apparatus according to claim 16, wherein the obtaining module comprises:
a detection unit, configured to detect whether navigation functionality is activated in the target vehicle;
a first obtaining unit, configured to obtain a current place of departure, the current departure date, and the current departure time corresponding to the target vehicle if the navigation functionality is not activated in the target vehicle;
a first generating unit, configured to generate a predicted destination corresponding to the target vehicle based on a relationship among the current place of departure, the current departure date, and the current departure time;
a second generating unit, configured to generate a predicted driving route for driving of the target vehicle from the current place of departure to the predicted destination based on a relationship among the predicted destination, the current place of departure, the current departure date, and the current departure time;
a judgment unit, configured to determine whether the predicted destination and the predicted driving route are accurate; and
a first determining unit, configured to: if the predicted destination and the predicted driving route are accurate, determine the predicted destination to be the current destination, and determine the predicted driving route to be the target driving route.

18. The apparatus according to claim 17, wherein the first generating unit is configured to input the current place of departure, the current departure date, and the current departure time into a destination prediction model, and perform, by using the destination prediction model, feature extraction on the current place of departure, the current departure date, and the current departure time to output the predicted destination, wherein the destination prediction model is obtained by training based on a plurality of first historical user travel routes, each of the first historical user travel routes comprises a first historical place of departure, a first historical destination, a first historical departure date, and a first historical departure time, and the first historical destination is used as first label information.

19. The apparatus according to claim 17, wherein the second generating unit is configured to: determine current traffic conditions for optional routes from the current place of departure to the predicted destination on the current departure date and at the current departure time based on the relationship among the predicted destination, the current place of departure, the current departure date, and the current departure time; obtain current travel weather; and input the current travel weather, the current place of departure, the predicted destination, the optional routes, and the current traffic conditions corresponding to the optional routes into a travel route prediction model to output the predicted driving route corresponding to the predicted destination, wherein the travel route prediction model is obtained by training based on a plurality of second historical user travel routes, each of the second historical user travel routes comprises a second historical place of departure, a second historical destination, a second historical travel weather, a second historical driving route from the second historical place of departure to the second historical destination, and a historical traffic condition of the second historical driving route, and the second historical driving route is used as second label information.

20. The apparatus according to claim 17, wherein the judgment unit is configured to display the predicted destination and the predicted driving route to a user, and receive a first instruction inputted by the user; and determine, based on the first instruction, whether the predicted destination and the predicted driving route are accurate.

21. The apparatus according to claim 19, wherein the second generating unit is configured to: receive the current destination inputted by a user if the predicted destination or the predicted driving route is not accurate; input the current travel weather, the current place of departure, the current destination, and the current traffic conditions corresponding to the optional routes into the travel route prediction model to output a candidate driving route corresponding to the current destination; and
correct the candidate driving route in real time based on current location information of the target vehicle to obtain the target driving route.

22. The apparatus according to claim 16, wherein the judgment module comprises:
a second obtaining unit, configured to obtain a current place of departure and the current departure time of the target vehicle;
a second determining unit, configured to determine, based on the current departure time, an arrival time of the target vehicle driving from the current place of departure to the current destination according to the target driving route;
a third obtaining unit, configured to obtain a current remaining state of charge of the target vehicle;
a calculation unit, configured to calculate, based on the current remaining state of charge of the target vehicle, an estimated remaining state of charge of the target vehicle after driving to the current destination; and
a third determining unit, configured to determine, based on the arrival time, the estimated remaining state of charge, and the current destination, whether the target vehicle will be recharged after driving to the current destination.

23. The apparatus according to claim 22, wherein the calculation unit is configured to obtain a terrain of the target driving route, an average driving speed of the target vehicle, a current driving mileage corresponding to the target driving route, current ambient temperature information, and in-vehicle electrical device setting information; determine a first trip energy consumption for driving of the target vehicle from the current place of departure to the current destination according to the target driving route based on the terrain, the average driving speed, the current driving mileage, the current ambient temperature information, and the in-vehicle electrical device setting information; and subtract the first trip energy consumption from the current remaining state of charge to obtain the estimated remaining state of charge.

24. The apparatus according to claim 22, wherein the third determining unit is configured to input the arrival time, the estimated remaining state of charge, and the current destination into a recharging behavior prediction model to output a result of whether the target vehicle will be recharged after driving to the current destination by using the recharging behavior prediction model, wherein the recharging behavior prediction model is obtained by training based on historical recharging places, historical recharging time periods, and historical recharging initial ranges of remaining state of charge.

25. The apparatus according to claim 22, wherein the third determining unit is configured to:
determine whether the current destination meets a recharging condition;
when the current destination meets the recharging condition, determine whether the arrival time is within a historical recharging time period range and whether the estimated remaining state of charge is within a historical recharging initial range of remaining state of charge;
if the arrival time is within the historical recharging time period range and the estimated remaining state of charge is within the historical recharging initial range of remaining state of charge, determine that the target vehicle will be recharged after driving to the current destination; and
if the arrival time is not within the historical recharging time period range or/and the estimated remaining state of charge is not within the historical recharging initial range of remaining state of charge, determine that the target vehicle will not be recharged after driving to the current destination.

26. The apparatus according to claim 16, wherein the second determining module is configured to: if the current destination is a one-way destination and the target vehicle will not be recharged after driving to the current destination, determine a first trip energy consumption for driving of the target vehicle from a current place of departure to the current destination according to the target driving route; calculate usable energy that the target vehicle can provide by consumption from a current remaining state of charge to a preset equilibrium state of charge; if the first trip energy consumption is less than or equal to the usable energy, determine that the energy management mode corresponding to the target vehicle is pure electric driving mode; and if the first trip energy consumption is greater than the usable energy, determine that the energy management mode corresponding to the target vehicle is hybrid driving mode.

27. The apparatus according to claim 16, wherein the second determining module is configured to: if the current destination is a one-way destination and the target vehicle will be recharged after driving to the current destination, determine a first trip energy consumption for driving of the target vehicle from a current place of departure to the current destination according to the target driving route; calculate maximum energy that the target vehicle can provide by consumption from a current remaining state of charge to a minimum allowable state of charge; compare the first trip energy consumption with the maximum energy; if the first trip energy consumption is less than or equal to the maximum energy, adjust a preset equilibrium state of charge corresponding to the target vehicle down to the minimum allowable state of charge, and determine that the energy management mode corresponding to the target vehicle is pure electric driving mode, wherein the preset equilibrium state of charge is a preset value of the target vehicle, and when the current remaining state of charge reaches the preset equilibrium state of charge, the target vehicle is automatically adjusted to hybrid driving mode; and if the first trip energy consumption is greater than the maximum energy, determine that the energy management mode corresponding to the target vehicle is the hybrid driving mode.

28. The apparatus according to claim 16, wherein the second determining module is configured to: if the current destination is a round-trip destination and the target vehicle will not be recharged after driving to the current destination, determine a second trip energy consumption for driving of the target vehicle from a current place of departure to the current destination according to the target driving route and returning from the current destination to the current place of departure; calculate usable energy that the target vehicle can provide by consumption from a current remaining state of charge to a preset equilibrium state of charge; if the second trip energy consumption is greater than the usable energy, determine that the energy management mode corresponding to the target vehicle is hybrid driving mode; and if the second trip energy consumption is less than or equal to the usable energy, determine that the energy management mode corresponding to the target vehicle is pure electric driving mode.

29. The apparatus according to claim 16, wherein the second determining module is configured to: if the current destination is a round-trip destination and the target vehicle will be recharged after driving to the current destination, determine a first trip energy consumption for driving of the target vehicle from a current place of departure to the current destination according to the target driving route; calculate maximum energy that the target vehicle can provide by consumption from a current remaining state of charge to a minimum allowable state of charge; compare the first trip energy consumption with the maximum energy; if the first trip energy consumption is less than or equal to the maximum energy, adjust a preset equilibrium state of charge corresponding to the target vehicle down to the minimum allowable state of charge, and determine that the energy management mode corresponding to the target vehicle is pure electric driving mode, wherein the preset equilibrium state of charge is a preset value of the target vehicle, and when the current remaining state of charge reaches the preset equilibrium state of charge, the target vehicle is automatically adjusted to hybrid driving mode; and if the first trip energy consumption is greater than the maximum energy, determine that the energy management mode corresponding to the target vehicle is the hybrid driving mode.

30. The apparatus according to any one of claims 26 to 29, wherein the second determining module is configured to:
when the energy management mode corresponding to the target vehicle is the hybrid driving mode, obtain congested road segments or/and urban road segments in the target driving route corresponding to the target vehicle;
determine, based on road segment lengths of the congested road segments or/and the urban road segments, energy consumptions required for traveling through the congested road segments or/and the urban road segments;
calculate a sum of the energy consumptions required for traveling through the congested road segments or/and the urban road segments to obtain a total required energy consumption;
determine target road segments from the congested road segments or/and the urban road segments based on a relationship between the total required energy consumption and the usable energy or the maximum energy, and plan to travel through the target road segments in the pure electric driving mode; and
control an engine to engage in high-efficiency driving mode for road segments other than the target road segments.

31. An electronic device, comprising: a memory and a processor, wherein the memory and the processor are communicatively connected to each other, the memory has computer instructions stored therein, and the processor is configured to perform the energy management method of any one of claims 1 to 15 by executing the computer instructions.

32. An intelligent vehicle, comprising an intelligent vehicle body and an electronic device, wherein the electronic device is configured to perform the energy management method of any one of claims 1 to 15.

33. A computer-readable storage medium, wherein the computer-readable storage medium has computer instructions stored therein, and the computer instructions are configured to enable a computer to perform the energy management method of any one of claims 1 to 15.
